# EUROPEAN PATENT SPECIFICATION

(11) **EP 4 089 978 B1**
(45) Date of publication and mention of the grant of the patent: **30.09.2026**
(21) Application number: 21757934.1
(22) Date of filing: 08.02.2021
(51) Int. Cl.: H04L 9/32, H04L 9/08, G06F 21/44, H04L 9/40, H04L 67/12

(54) **AUTHENTICATION METHOD AND APPARATUS FOR VEHICLE-MOUNTED DEVICE**
AUTHENTIFIZIERUNGSVERFAHREN UND -VORRICHTUNG FÜR EINE FAHRZEUGMONTIERTE VORRICHTUNG
PROCÉDÉ ET APPAREIL D'AUTHENTIFICATION POUR DISPOSITIF EMBARQUÉ

(30) Priority: 18.02.2020 CN 202010098329
(43) Date of publication of application: 16.11.2022
(73) Proprietor: Yinwang Intelligent Technologies Co., Ltd., Shenzhen, Guangdong 518110 (CN)
(72) Inventor: KANG, Xin, Shenzhen, Guangdong 518129 (CN); WANG, Haiguang, Shenzhen, Guangdong 518129 (CN); LEI, Zhongding, Shenzhen, Guangdong 518129 (CN); WEI, Zhuo, Shenzhen, Guangdong 518129 (CN)
(74) Representative: Körber, Martin Hans
(86) International application number: PCT/CN2021/075947
(87) International publication number: WO 2021/164609

(56) References cited:
- EP-A1- 3 474 488
- CN-A- 101 678 777
- CN-A- 108 123 948
- CN-A- 110 071 904
- CN-A- 110 071 904
- CN-A- 110 495 135
- US-A1- 2003 147 534
- US-A1- 2014 196 142
- HORNQUIST ASTRAND APPLE L ET AL: "Generic Security Service Application Program Interface (GSS-API): Delegate if Approved by Policy; rfc5896.txt", GENERIC SECURITY SERVICE APPLICATION PROGRAM INTERFACE (GSS-API): DELEGATE IF APPROVED BY POLICY; RFC5896.TXT, INTERNET ENGINEERING TASK FORCE, IETF; STANDARD, INTERNET SOCIETY (ISOC) 4, RUE DES FALAISES CH- 1205 GENEVA, SWITZERLAND, 28 June 2010 (2010-06-28), pages 1 - 6, XP015070854
- KLEBERGER PIERRE ET AL: "Protecting Vehicles Against Unauthorised Diagnostics Sessions Using Trusted Third Parties", 24 September 2013, SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 70 - 81, ISBN: 978-3-540-74549-5, XP047039863

## Description

### TECHNICAL FIELD

This application relates to the field of vehicles, and more specifically, to a method for authenticating a vehicle-mounted device, and an apparatus

### BACKGROUND

An autonomous vehicle (Autonomous vehicle), also referred to as a self-driving vehicle, a computer driving vehicle, or a wheeled mobile robot, is an intelligent vehicle that implements self-driving by using a computer system. The autonomous vehicle may rely on collaboration between artificial intelligence, visual computing, radar, a monitoring apparatus, and a global positioning system, so that a computer can automatically and safely operate a motor vehicle without any active human operation. The autonomous vehicle has become a trend of vehicle development in the future. With vigorous development of autonomous driving technologies, the autonomous driving technologies become increasingly mature.

Currently, the autonomous vehicle makes a driving decision depending on information such as a road condition provided by an advanced driver assistant system (Advanced Driving Assistant System, ADAS). However, the ADAS collects road condition information depends on many sensors, for example, a camera, a millimeter-wave radar, an ultrasonic radar, and a laser detection and ranging (Laser Detection and Ranging, LiDAR) system. The information such as the road condition collected by these sensors directly affects selection of the driving decision, resulting in affecting braking and driving safety performance. In another aspect, with intelligent and electronic development of vehicles, one vehicle may include approximately 100 electronic control units (Electronic Control Units, ECUs), and each ECU is configured to assist the vehicle in implementing some of electronic functions. For example, an ECU of an engine is configured to control driving of the vehicle, and is used to detect a state in which a driver manipulates an accelerator pedal and a transformation, receive environmental condition information such as an air temperature and atmospheric pressure, and then send necessary information such as air, a fuel injection amount, and an ignition moment to a throttle and a fuel injection nozzle, so that the engine keeps running in a good state.

It is clearly that quality of vehicle-mounted devices such as the sensors and the ECUs is of great importance to implementation of an electronic control function and driving safety of the vehicle. Usually, a vehicle-mounted device supplied by a formal manufacturer has higher quality, but quality of a vehicle-mounted device supplied by an informal manufacturer cannot be ensured. If a vehicle-mounted device with poorer quality is connected to the vehicle, the driving safety of the vehicle cannot be ensured, and even a traffic accident may be caused.
US2014196142A1 discloses authentication techniques for electronic devices. A first device (e.g., a host device) can maintain a list of known-good devices (e.g., accessory devices) with which it can interoperate. Information identifying a second device can be added to the known-good list when the second device successfully connects to the first device and completes an authentication process. After the second device disconnects, the first device can retain the identifying information on the known-good list for a predetermined period of time, after which the information can expire. If the second device reconnects to the host before its information expires, the authentication process can be bypassed.
RFC 5896, June 2010, relates to Several Generic Security Service Application Program Interface (GSS-API) applications working in a multi-tiered architecture. In particular, the server takes advantage of delegated user credentials to act on behalf of the user and contact additional servers. In effect, the server acts as an agent on behalf of the user. Examples include web applications that need to access e-mail or file servers, including CIFS (Common Internet File System) file servers. However, delegating the user credentials to a party who is not sufficiently trusted is problematic from a security standpoint. Kerberos provides a flag called OK-AS-DELEGATE that allows the administrator of a Kerberos realm to communicate that a particular service is trusted for delegation. RFC 5896 adds support for this flag and similar facilities in other authentication mechanisms to GSS-API.
EP3474488A1 discloses a system including a certification authority and a vehicle-mounted computer mounted in a vehicle. The certification authority includes a certification authority key storage that stores a certification authority public key certificate and a certification authority private key, a first communicator that receives an issuance request that is configured to request issuance of a vehicle-mounted computer public key certificate, and a vehicle-mounted computer public key certificate issuer that is configured to apply a signature to the vehicle-mounted computer public key included in the issuance request with the certification authority private key and issue the vehicle-mounted computer public key certificate. The first communicator is configured to transmit the vehicle-mounted computer public key certificate to the vehicle-mounted computer that is a transmission source of the issuance request. The vehicle-mounted computer includes a vehicle-mounted computer key generator that is configured to generate the vehicle-mounted computer public key and a vehicle-mounted computer private key that is paired with the vehicle-mounted computer public key, and a public key certificate acquirer that is configured to transmit the issuance request to the certification authority and acquires the vehicle-mounted computer public key certificate that the certification authority transmits in response to the issuance request.
CN110071904A discloses a vehicle terminal detection method and system, a server and a storage medium. The detection method comprises the steps that a vehicle-mounted terminal obtains a vehicle VIN code of a vehicle corresponding to the vehicle-mounted terminal, and sends a binding request instruction to the server according to the vehicle VIN code and an identification code of the vehicle-mounted terminal; the server receives the request binding instruction and searches the identification code in the request binding instruction in a database; and if the identification code is found in the database, the vehicle-mounted terminal is determined to be a legal terminal, and the vehicle-mounted terminal is bound with the vehicle correspondingto the vehicle-mounted terminal according to the vehicle VIN code and the identification code, so that the vehicle-mounted terminal conveniently uploads the data of the vehicle corresponding to the vehicle-mounted terminal to the server. According to the detection method of the vehicle terminal, the legality of the identity of the terminal can be detected, it is ensured that the legal terminal uploads the legal data, and the safety of the vehicle and the monitoring server is ensured.
Pierre Kleberger et al, "Protecting Vehicles Against Unauthorised Diagnostics Sessions Using Trusted Third Parties", September 2013, SAFECOMP 2013, Lecture Notes in Computer Science, vol 8153, Springer, Berlin, Heidelberg, discloses a method to protect vehicles against unauthorised diagnostics sessions. A trusted third party is introduced to authorise sessions, thus a diagnostics session does not rely solely on proper identification and authentication of diagnostics equipment. This approach enables vehicles to verify the validity of diagnostics requests. It is transparent to the diagnostics protocol being used, supports different levels of trust, and can control what commands are permitted during diagnostics sessions.

### SUMMARY

This application provides apparatus for verifying a manufacturer of the vehicle-mounted device, and help improve driving safety of a vehicle. The present invention is defined by the appended set of claims. The present invention is defined by the appended set of claims. In the following, embodiments that are not covered by the claims are not part of the invention, but as helpful illustrations for understanding the invention.

In this embodiment of this application, the to-be-authenticated first vehicle-mounted device in the vehicle can request the trusted voucher from the trusted third party by using the first VTA. Correspondingly, after verifying that the ID of the first vehicle-mounted device corresponds to the ID, recorded by the trusted third party, of the vehicle-mounted device manufactured by the one or more vehicle-mounted device manufacturers, the trusted third party can send the trusted voucher to the first VTA. In other words, the trusted third party is used to verify a manufacturer of the first vehicle-mounted device. This helps improve driving safety of the vehicle.

In this embodiment of this application, the to-be-authenticated first vehicle-mounted device in the vehicle can request the trusted voucher from the trusted third party by using the first VTA. Correspondingly, after verifying that the ID of the first vehicle-mounted device corresponds to the ID, recorded by the trusted third party, of the vehicle-mounted device manufactured by the one or more vehicle-mounted device manufacturers, the trusted third party can send the trusted voucher to the first VTA. In other words, the trusted third party is used to verify the manufacturer of the first vehicle-mounted device. This helps improve driving safety of the vehicle.

In this embodiment of this application, the trusted third party encrypts the first authentication key based on the public key of the first VTA, and configures the encrypted first authentication key for the first VTA. This helps improve security of transmitting the first authentication key.

In this embodiment of this application, after the first VTA determines that the trusted third party is recorded in the prestored whitelist, the first VTA sends the first voucher request to the trusted third party, to reduce overheads of communication between the first VTA and the trusted third party.

In this embodiment of this application, the to-be-authenticated first vehicle-mounted device in the vehicle can request the trusted voucher from the trusted third party by using the first VTA. Correspondingly, after verifying that the ID of the first vehicle-mounted device corresponds to the ID, recorded by the trusted third party, of the vehicle-mounted device manufactured by the one or more vehicle-mounted device manufacturers, the trusted third party can send the trusted voucher to the first VTA. In other words, the trusted third party is used to verify a manufacturer of the first vehicle-mounted device. This helps improve driving safety of the vehicle.

In this embodiment of this application, the first VTA sends the ID of the first VTA to the trusted third party. The trusted third party determines whether there is the first homing relationship between the first vehicle-mounted device and the vehicle in which the first VTA is located, or determines whether the first vehicle-mounted device is sold to a manufacturer of the vehicle in which the first VTA is located, so that transaction information of the first vehicle-mounted device can be traced.

In this embodiment of this application, the trusted third party sends a query request to the ownership tracker platform, to query the first homing relationship between the first vehicle-mounted device and the vehicle in which the first VTA is located, or to query whether the first vehicle-mounted device is sold to the manufacturer of the vehicle in which the first VTA is located, so that the transaction information of the first vehicle-mounted device can be traced.

In this embodiment of this application, one or more of the first homing relationship, the second homing relationship, the third homing relationship, or the fourth homing relationship are recorded on the ownership tracker platform, so that sales information of one or more of a vehicle part and the entire vehicle can be queried, to help implement traceability of sources of the vehicle part and the entire vehicle.

In this embodiment of this application, the trusted third party derives the first authentication key based on the first nonce, and configures the derived first authentication key for the first VTA, so that the first VTA can communicate with the first vehicle-mounted device by using the first authentication key. This helps improve security of configuring the first authentication key.

In this embodiment of this application, the first VTA encrypts the trusted voucher based on the first authentication key, and sends the encrypted trusted voucher to the first vehicle-mounted device, so that the first vehicle-mounted device decrypts the encrypted trusted voucher based on a third authentication key, to verify a matching degree between the third authentication key and the first authentication key.

In this embodiment of this application, the first VTA sends the message authentication code MAC of the trusted voucher to the first vehicle-mounted device, to improve security of transmitting the trusted voucher.

In this embodiment of this application, the first VTA generates the second authentication key based on the second nonce sent by the first vehicle-mounted device, and configures the second authentication key for the first vehicle-mounted device, to improve security of generating the second authentication key.

In this embodiment of this application, the first VTA encrypts the second authentication key by using the public key of the first vehicle-mounted device, and sends the encrypted second authentication key to the first vehicle-mounted device, to improve security of transmitting the second authentication key.

In this embodiment of this application, the first VTA derives the authentication key of the second vehicle-mounted device based on the first authentication key. In other words, the first VTA may not need to store the authentication key of the second vehicle-mounted device, to reduce a storage resource of the first VTA.

In this embodiment of this application, after determining that the trusted third party is recorded in the prestored whitelist, the first VTA sends the first voucher request to the trusted third party, to improve security of the trusted third party.

In this embodiment of this application, the to-be-authenticated first vehicle-mounted device in the vehicle can request the trusted voucher from the trusted third party by using the first VTA. Correspondingly, after verifying that the ID of the first vehicle-mounted device corresponds to the ID, recorded by the trusted third party, of the vehicle-mounted device manufactured by the one or more vehicle-mounted device manufacturers, the trusted third party can send the trusted voucher to the first VTA. In other words, the trusted third party is used to verify a manufacturer of the first vehicle-mounted device. This helps improve driving safety of the vehicle.

In this embodiment of this application, the trusted third party sends the trusted voucher to the first VTA when the trusted third party determines that the ID of the first vehicle-mounted device corresponds to the ID of the vehicle-mounted device manufactured by the one or more vehicle-mounted device manufacturers, and there is the first homing relationship between the first vehicle-mounted device and the first VTA. This facilitates reliability of the first vehicle-mounted device.

In this embodiment of this application, the trusted third party sends a query request to the ownership tracker platform, to query the first homing relationship between the first vehicle-mounted device and the vehicle in which the first VTA is located, or to query whether the first vehicle-mounted device is sold to a manufacturer of the vehicle in which the first VTA is located, so that transaction information of the first vehicle-mounted device can be traced.

In this embodiment of this application, one or more of the first homing relationship, the second homing relationship, the third homing relationship, or the fourth homing relationship are recorded on the ownership tracker platform, so that sales information of one or more of a vehicle part and an entire vehicle can be queried, to help implement traceability of sources of the vehicle part and the entire vehicle.

In this embodiment of this application, the first vehicle-mounted device sends the first nonce to the trusted third party by using the first VTA, so that the trusted third party derives the first authentication key based on the first nonce. This helps improve security of configuring the first authentication key.

In this embodiment of this application, the first vehicle-mounted device generates the third authentication key based on the first nonce and the prestored first initial authentication key. In other words, the first authentication key does not need to be configured for the first vehicle-mounted device. This reduces transmission of the first authentication key and improves security of communication between the first vehicle-mounted device and the first VTA.

In this embodiment of this application, the first VTA encrypts the trusted voucher based on the first authentication key, and sends the encrypted trusted voucher to the first vehicle-mounted device, so that the first vehicle-mounted device decrypts the encrypted trusted voucher based on the third authentication key, to verify a matching degree between the third authentication key and the first authentication key.

In this embodiment of this application, the first VTA sends the message authentication code MAC of the trusted voucher to the first vehicle-mounted device, to improve security of transmitting the trusted voucher.

In this embodiment of this application, the first VTA generates the second authentication key based on the second nonce sent by the first vehicle-mounted device, and configures the second authentication key for the first vehicle-mounted device, to improve security of generating the second authentication key.

In this embodiment of this application, the first VTA encrypts the second authentication key by using the public key of the first vehicle-mounted device, and sends the encrypted second authentication key to the first vehicle-mounted device, to improve security of transmitting the second authentication key.

In this embodiment of this application, the trusted third party generates the first authentication key based on the first nonce, and configures the first authentication key for the first vehicle-mounted device and/or the first VTA. This helps improve automation of configuring the authentication key.

In this embodiment of this application, the trusted third party encrypts the first authentication key by using the public key of the first VTA, and sends the encrypted first authentication key to the first VTA. This helps improve security of transmitting the first authentication key.

In this embodiment of this application, the first vehicle-mounted device generates the third authentication key based on the first nonce, and uses the third authentication key and the first authentication key together as an authentication key for communication between the first vehicle-mounted device and the first VTA. This avoids sending the first authentication key to the first vehicle-mounted device, thereby improving security of the first authentication key.

### BRIEF DESCRIPTION OF DRAWINGS

FIG. 1 is a schematic diagram of an architecture of an authentication system to which an embodiment of this application is applicable;
FIG. 2 is a schematic flowchart of a method for authenticating a vehicle-mounted device according to an embodiment of this application;
FIG. 3 is a schematic diagram of a method for recording a homing relationship by a plurality of manufacturers;
FIG. 4 is a flowchart of a method for configuring an authentication key according to an embodiment of this application;
FIG. 5A and FIG. 5B are a flowchart of an initial authentication method for a vehicle-mounted device and a VTA according to an embodiment of this application;
FIG. 6 is a flowchart of a method for configuring an authentication key according to another embodiment of this application;
FIG. 7A and FIG. 7B are a schematic flowchart of an initial authentication method for a vehicle-mounted device and a VTA according to another embodiment of this application;
FIG. 8 is a flowchart of a method for deriving an authentication key according to an embodiment of this application;
FIG. 9 is a schematic diagram of a hierarchical relationship between vehicle-mounted devices in a vehicle;
FIG. 10 is a schematic diagram of a derivation relationship between authentication keys of vehicle-mounted devices according to an embodiment of this application;
FIG. 11 is a schematic diagram of a trusted third party according to an embodiment of this application;
FIG. 12 is a schematic block diagram of a trusted third party according to another embodiment of this application;
FIG. 13 is a schematic diagram of a first VTA according to an embodiment of this application;
FIG. 14 is a schematic block diagram of a first VTA according to another embodiment of this application;
FIG. 15 is a schematic block diagram of a first vehicle-mounted device according to an embodiment of this application; and
FIG. 16 is a schematic block diagram of a first vehicle-mounted device according to another embodiment of this application.

### DESCRIPTION OF EMBODIMENTS

The following describes technical solutions of this application with reference to the accompanying drawings.

Currently, a vehicle 100 supporting an autonomous driving technology usually makes a driving decision depending on information such as a road condition provided by an advanced driver-assistance system (Advanced Driving Assistant System, ADAS). However, the ADAS needs to collect road condition information depending on many sensors 131, for example, a camera, a millimeter-wave radar, an ultrasonic radar, and a laser detection and ranging (Laser Detection and Ranging, LiDAR) system. The information such as the road condition collected by these sensors 131 directly affects selection of a driving decision, resulting in affecting braking and driving safety performance.

In another aspect, with intelligent and electronic development of vehicles, one vehicle 100 may include approximately 100 electronic control units (Electronic Control Units, ECUs) 132, and each ECU 132 is configured to assist the vehicle in implementing a corresponding electronic function. For example, an ECU of an engine is configured to control driving of the vehicle, and is used to detect a state in which a driver manipulates an accelerator pedal and a transmission, receive environmental condition information such as an air temperature and atmospheric pressure, then, determine necessary information such as air content, a fuel injection amount, and an ignition moment in the engine based on the collected environmental condition information, and finally, control a throttle and a fuel injection nozzle of the engine based on the necessary information, so that the engine can run in a better state.

It can be learned from the foregoing descriptions that quality of vehicle-mounted devices 130 such as the sensors 131 and the ECUs 132 is of great importance to implementation of an electronic control function and driving safety of the vehicle. Usually, a vehicle-mounted device supplied by a formal manufacturer has higher quality, but quality of a vehicle-mounted device supplied by an informal manufacturer cannot be ensured. If a vehicle-mounted device with poorer quality is connected to the vehicle, the driving safety of the vehicle cannot be ensured, and even a traffic accident may be caused.

Therefore, Embodiments of this application provide an authentication solution for a vehicle-mounted device based on a trusted third party, to authenticate a manufacturer of the vehicle-mounted device. In this way, after a to-be-authenticated vehicle-mounted device is connected to the vehicle, the authentication solution for the vehicle-mounted device provided in embodiments of this application can be used. A trusted third party that maintains information about the manufacturer of the vehicle-mounted device is used to authenticate the manufacturer of the vehicle-mounted device. If the authentication succeeds, the vehicle-mounted device is allowed to be connected to the vehicle. If the authentication fails, the vehicle-mounted device is rejected to be connected to the vehicle. In this way, a case in which the driving safety of the vehicle cannot be ensured because the vehicle-mounted device is directly connected to the vehicle without authentication on the manufacturer of the vehicle-mounted device in the conventional technology can be avoided.

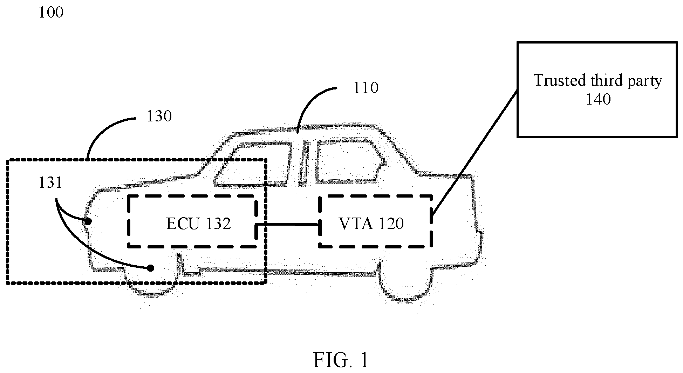

For ease of understanding, the following first describes terms in embodiments of this application, and then describes, with reference to FIG. 1, an authentication system used in embodiments of this application.
1. Symmetrical encryption (symmetrical encryption), also referred to as single-key encryption, refers to an encryption method that uses a one-key cryptosystem. A same key can be used for both encryption and decryption of information.
2. Asymmetric cryptography (asymmetric cryptography) is a type of a cryptographic algorithm that requires two keys: a public key (public key), and a private key (private key). The public key and the private key are a pair of keys. If the public key is used to encrypt data, only the corresponding private key can be used to decrypt the data. This algorithm is referred to as an asymmetric encryption algorithm because two different keys are used for encryption and decryption.

A basic process of exchanging confidential information by using the asymmetric encryption algorithm is as follows: A party A generates a key pair and makes a public key public. If a party B needs to send information to the party A, the party B may use the public key of the party A to encrypt the information and send encrypted information to the party A. Accordingly, the party A uses a private key of the party A to decrypt the encrypted information. If the party A needs to send information to the party B, the party A may use a public key of the party B to encrypt the information and send encrypted information to the party B. Accordingly, the party B uses a private key of the party B to decrypt the encrypted information.

In another aspect, the key pair may be further used for identity authentication. To be specific, the party A may use the private key of the party A to sign (encrypt) information and send signed information to the party B. Accordingly, the party B uses the public key of the party A to perform signature verification on the signed information. If the authentication succeeds, it is indicated that the information is really from the party A and has not been tampered with or forged by a third party.

3. Certificate: In the foregoing signing process, an information receiver needs to keep a public key by the information receiver. However, because there are a large quantity of information senders, and each information sender has a corresponding own public key, the information receiver also needs to keep a large quantity of public keys. In addition, the public key locally stored by the information receiver may be tampered with or replaced. To resolve the foregoing problems of storage and security of the public keys, a unified certificate authority (Certificate Authority, CA) may be used to manage public keys of all parties that need to send data, and authenticate and encrypt the public keys.

A public key obtained after authentication and encryption is a certificate, which is also referred to as a CA certificate. In other words, the CA certificate includes the public key. The CA uses a private key in a unified key pair to encrypt a public key of an applicant. In this way, when sending data, the applicant (also referred to as a "sender") uses a private key of the applicant to generate a signature, and sends the signature, a certificate, and the data together to a receiver. After obtaining the certificate, the receiver may use the public key in the unified key pair to decrypt the certificate, to obtain the public key of the sender in the certificate.

The public key in the unified key pair is also referred to as a CA root certificate. Usually, the CA root certificate needs to be downloaded from the CA and installed on a corresponding client that receives data, for example, a browser. After obtaining the CA root certificate, the receiver may decrypt the certificate, obtain the public key of the sender, decrypt the signature of the sender, and compare an obtained digest with a recalculated digest, to verify completeness of data content.

4. Alliance chain (alliance chain): The alliance chain is only used for an alliance member. Because all or some functions of the alliance chain are available only to the member, read and write permission and an accounting rule on the alliance chain are customized based on an alliance rule. Usually, the alliance chain is maintained by participant member organizations and provides a complete set of security management functions such as management, authentication, authorization, monitoring, and auditing for participating members.

FIG. 1 is a schematic diagram of an architecture of an authentication system according to an embodiment of this application. An authentication system 100 shown in FIG. 1 includes a vehicle 110 and a trusted third party (Trusted Third Party, TTP) 140. The vehicle 110 includes a vehicle-mounted device 130 and a vehicle trust anchor (Vehicle Trust Anchor, VTA) 120.

The vehicle-mounted device 130 is located in the vehicle, and is configured to assist the vehicle in implementing some functions. For example, the vehicle-mounted device is the sensor 131 or the ECU 132 that is described above.

The VTA 120 is located in the vehicle, and is configured to communicate with the trusted third party 140.

The trusted third party 140 is a third-party platform trusted by both the vehicle-mounted device 130 and the VTA 120. For example, the trusted third party 140 may be a database or a server.

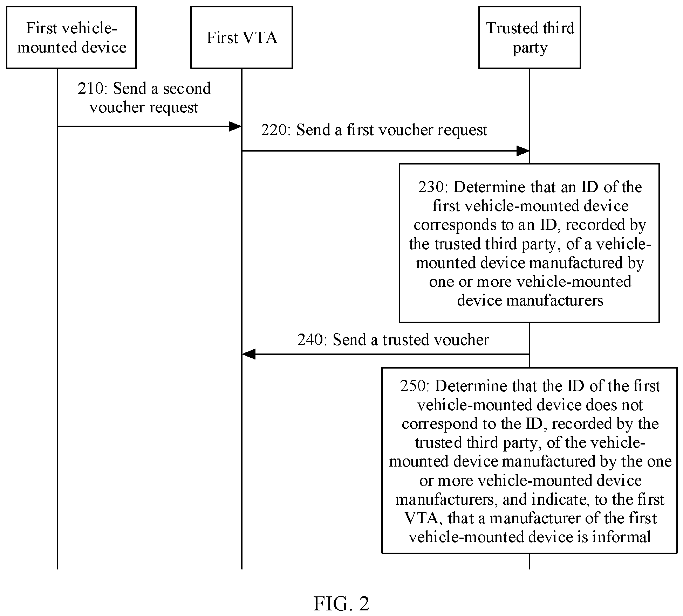

The following describes a method for authenticating a vehicle-mounted device in embodiments of this application based on the authentication system shown in FIG. 1. FIG. 2 is a schematic flowchart of a method for authenticating a vehicle-mounted device according to an embodiment of this application. The method shown in FIG. 2 includes step 210 to step 250.

210: A to-be-authenticated first vehicle-mounted device in a vehicle sends a second voucher request to a first vehicle trust anchor VTA of the vehicle. The second voucher request is used to request a trusted voucher for the first vehicle-mounted device from a trusted third party, and the second voucher request carries an identifier (identification number, ID) of the first vehicle-mounted device. The trusted third party stores an ID of a vehicle-mounted device manufactured by one or more vehicle-mounted device manufacturers.

The ID of the vehicle-mounted device is used to identify one vehicle-mounted device or one type of vehicle-mounted devices, for example, may be a model of the vehicle-mounted device manufactured by the vehicle-mounted device manufacturer or an identification number of the vehicle-mounted device. Information about these vehicle-mounted devices is used to identify the vehicle-mounted devices.

It should be noted that IDs of these vehicle-mounted devices may be built-in in the vehicle-mounted devices by the vehicle-mounted device manufacturer before delivery of the vehicle-mounted devices.

The first VTA may be understood as the VTA 120 in the authentication system 100.

The trusted third party may be understood as a node trusted by the vehicle-mounted device manufacturer. After producing the vehicle-mounted device, the vehicle-mounted device manufacturer may send the information about the manufactured vehicle-mounted device to the trusted third party, so that the trusted third party subsequently verifies the vehicle-mounted device manufacturer and issues a trusted voucher for the vehicle-mounted device that meets a condition. Therefore, the trusted third party is also referred to as a manufacturer authorized signing authority (Manufacturer Authorized Signing Authority, MASA).

220: The first VTA sends a first voucher request to the trusted third party. The first voucher request is used to request the trusted voucher for the first vehicle-mounted device, and the first voucher request carries the ID of the first vehicle-mounted device.

The first voucher request and the second voucher request may be a same voucher request (voucher request), or may be different voucher requests. When the first voucher request and the second voucher request are a same voucher request, the first VTA does not process the second voucher request sent by the first vehicle-mounted device, but directly forwards the second voucher request to the trusted third party. When the first voucher request and the second voucher request are different voucher requests, the first VTA may process the second voucher request to obtain the first voucher request, and send the first voucher request to the trusted third party. There are a plurality of specific processing manners. For details, refer to the following descriptions. For brevity, details are not described herein again.

230: The trusted third party determines that the ID of the first vehicle-mounted device corresponds to the ID, recorded by the trusted third party, of the vehicle-mounted device manufactured by the one or more vehicle-mounted device manufacturers.

That the trusted third party determines that the ID of the first vehicle-mounted device corresponds to the ID, recorded by the trusted third party, of the vehicle-mounted device manufactured by the one or more vehicle-mounted device manufacturers may be understood as that the trusted third party determines that the recorded ID of the vehicle-mounted device manufactured by the one or more vehicle-mounted device manufacturers includes the ID of the first vehicle-mounted device.

240: The trusted third party sends the trusted voucher to the first VTA.

Certainly, the foregoing method may further include step 250: The trusted third party determines that the ID of the first vehicle-mounted device does not correspond to the ID, recorded by the trusted third party, of the vehicle-mounted device manufactured by the one or more vehicle-mounted device manufacturers, and the trusted third party may indicate, to the first VTA, that a manufacturer of the first vehicle-mounted device is informal. Correspondingly, the first VTA may reject access of the first vehicle-mounted device to a network of the vehicle in which the first VTA is located.

That the trusted third party determines that the ID of the first vehicle-mounted device does not correspond to the ID, recorded by the trusted third party, of the vehicle-mounted device manufactured by the one or more vehicle-mounted device manufacturers may be understood as that the ID, recorded by the trusted third party, of the vehicle-mounted device manufactured by the one or more vehicle-mounted device manufacturers does not include the ID of the first vehicle-mounted device.

There are a plurality of manners in which the trusted third party indicates, to the first VTA, that the manufacturer of the first vehicle-mounted device is informal. This is not limited in this embodiment of this application. For example, the trusted third party may not send any information to the first VTA. If the first VTA does not receive the trusted voucher within a preset time period, it may be considered that the manufacturer of the first vehicle-mounted device is informal. For another example, the trusted third party may send response information to the first VTA. The response information is used to indicate that the manufacturer of the first vehicle-mounted device is informal.

Optionally, the first voucher request may further carry an ID of the first VTA. Before step 220, the method further includes: The trusted third party determines a first homing relationship between the first vehicle-mounted device and the first VTA based on the ID of the first vehicle-mounted device and the ID of the first VTA. The first homing relationship indicates that the first vehicle-mounted device is mounted in a vehicle corresponding to the first VTA.

It should be noted that the first homing relationship may be recorded by a seller of the first vehicle-mounted device after the first vehicle-mounted device is sold, or may be recorded by a buyer of the first vehicle-mounted device after the first vehicle-mounted device is purchased. This is not limited in this embodiment of this application.

Correspondingly, if the trusted third party determines that there is no first homing relationship between the first vehicle-mounted device and the first VTA, the trusted third party may indicate the first VTA to reject access of the first vehicle-mounted device to the network of the vehicle in which the first VTA is located.

In this embodiment of this application, after the trusted third party determines the first homing relationship, the trusted third party sends the trusted voucher to the first VTA, so that the first vehicle-mounted device can access the network of the vehicle in which the first VTA is located. In this case, an authentication manner based on the first homing relationship can be understood as a two-way authentication for the first vehicle-mounted device and the first VTA. This helps further improve driving safety of the vehicle.

It should be noted that the foregoing solution of the two-way authentication based on the first homing relationship may be used in combination with the foregoing solution of verifying the manufacturer of the first vehicle-mounted device. To be specific, as described above, the trusted third party sends the trusted voucher to the first VTA when the trusted third party determines that the manufacturer of the first vehicle-mounted device belongs to the one or more manufacturers, and determines that there is the first homing relationship between the first vehicle-mounted device and the first VTA. Certainly, the foregoing solution of the two-way authentication based on the first homing relationship may be alternatively used independently. To be specific, the trusted third party sends the trusted voucher to the first VTA when the trusted third party determines that there is the first homing relationship between the first vehicle-mounted device and the first VTA. This is not limited in this embodiment of this application.

The first homing relationship may be further understood as that an owner of the first vehicle-mounted device is the vehicle in which the first VTA is located. Therefore, a platform that can store the homing relationship may be referred to as an ownership tracker (Ownership Tracker, OT) platform. The OT platform may be in a form of a database or a blockchain.

Optionally, that the trusted third party determines a first homing relationship between the first vehicle-mounted device and the first VTA includes: The trusted third party sends a query request to the ownership tracker platform. The query request is used to request to query the first homing relationship, the ownership tracker platform records the first homing relationship, and the query request carries the ID of the first vehicle-mounted device and the ID of the first VTA. The trusted third party receives a query result sent by the ownership tracker platform. The query result carries the first homing relationship.

Optionally, the ownership tracker platform further records one or more of the following information: a second homing relationship indicating that a first vehicle part is mounted on the first vehicle-mounted device, a third homing relationship indicating that the vehicle corresponding to the first VTA belongs to a user, or a fourth homing relationship indicating that a first vehicle belongs to a 4S shop.

Because the OT platform may record a plurality of homing relationships, the OT platform needs to support a plurality of manufacturers in access, to store the homing relationships, for example, the manufacturer of the first vehicle-mounted device, a manufacturer of the first vehicle part, and a manufacturer of the vehicle in which the first VTA is located. However, these manufacturers are usually widely distributed. Therefore, a decentralized database may be used as the OT platform, for example, a distributed database. Certainly, to improve security performance of recording the homing relationship, an alliance chain may be alternatively used as the OT platform. In this case, the manufacturers may be members of the alliance chain.

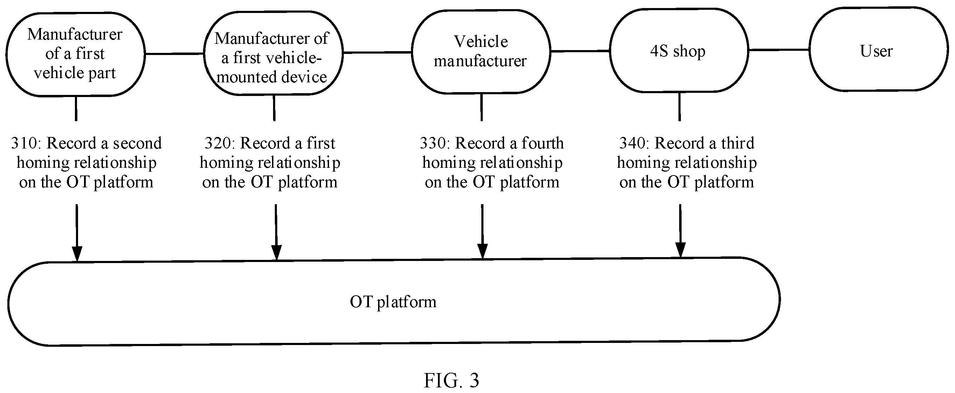

With reference to FIG. 3, the following uses an example in which the OT platform is the alliance chain to describe a method for recording a homing relationship by each manufacturer. FIG. 3 is a schematic diagram of a method for recording a homing relationship by a plurality of manufacturers. It is assumed that processes of assembly, maintenance, selling, and the like of the vehicle in which the first VTA is located include the manufacturer of the first vehicle part, the manufacturer of the first vehicle-mounted device, a vehicle manufacturer, the 4S shop, the user, and the like. To enrich homing relationships recorded in the alliance chain, all the manufacturer of the first vehicle part, the manufacturer of the first vehicle-mounted device, the vehicle manufacturer, and the 4S shop may be members of the alliance chain. The following provides specific descriptions with reference to step 310 to step 340. It should be understood that, for ease of description, the vehicle in which the first VTA is located is referred to as a "first vehicle" below.

310: After selling the first vehicle part to the manufacturer of the first vehicle-mounted device, the manufacturer of the first vehicle part may record the second homing relationship on the OT platform. The second homing relationship is used to indicate that the first vehicle part belongs to the first vehicle-mounted device.

320: After selling the first vehicle-mounted device to the manufacturer of the first vehicle, the manufacturer of the first vehicle-mounted device may record the first homing relationship on the OT platform. The first homing relationship is used to indicate that the first vehicle-mounted device belongs to the first vehicle.

330: After selling the first vehicle to the 4S shop, the manufacturer of the first vehicle may record the fourth homing relationship on the OT platform. The fourth homing relationship is used to indicate that the first vehicle belongs to the 4S shop.

340: After selling the first vehicle to the user, the 4S shop may record the third homing relationship on the OT platform. The third homing relationship is used to indicate that the first vehicle belongs to the user.

As described above, the homing relationship may be also understood as sales information recorded by each manufacturer. A name of the foregoing information is not limited in this embodiment of this application. For example, the first homing relationship may be also understood as that the manufacturer of the first vehicle-mounted device sells the first vehicle-mounted device to the manufacturer of the first vehicle. The second homing relationship may be also understood as that the manufacturer of the first vehicle part sells the first vehicle part to the manufacturer of the first vehicle-mounted device. The third homing relationship may be also understood as that the manufacturer of the first vehicle sells the first vehicle to the user. The fourth homing relationship may be also understood as that the manufacturer of the first vehicle sells the first vehicle to the 4S shop.

Optionally, to improve reliability of the foregoing authentication process, in a process of requesting the trusted voucher, the first vehicle-mounted device may randomly generate a nonce, and send the nonce to the trusted third party by using the first VTA. In this way, after determining to issue the trusted voucher to the first vehicle-mounted device, the trusted third party can add the nonce to the trusted voucher, to ensure that the trusted voucher is requested by the second voucher request that carries the nonce.

To further improve driving safety, the first VTA not only needs to authenticate the manufacturer of the first vehicle-mounted device by using the trusted third party, but also may first verify the trusted third party in a manner of preconfiguring a whitelist. To be specific, before step 220, the method further includes: The first VTA receives an ID of the trusted third party that is sent by the first vehicle-mounted device. The first VTA determines that the ID of the trusted third party corresponds to an ID or IDs of one or more trusted third parties that are recorded in a prestored whitelist. The whitelist stores the ID or IDs of the one or more trusted third parties that can be accessed by the first VTA.

The ID of the trusted third party is used to identify a trusted third party, for example, may be a name of the trusted third party, and for another example, may be alternatively a uniform resource locator (Uniform Resource Locator, URL) of the trusted third party.

Correspondingly, if the trusted third party is not recorded in the prestored whitelist of the first VTA, the first VTA rejects connection of the first vehicle-mounted device to the vehicle in which the first VTA is located. For example, the first VTA may not send the first voucher request to the trusted third party. For another example, the first VTA may alternatively send a rejection response to the first vehicle-mounted device. This is not limited in this embodiment of this application.

The ID of the trusted third party may be sent to the first VTA by the first vehicle-mounted device. Correspondingly, during the delivery of the first vehicle-mounted device, identification information of the trusted third party may be built-in in the first vehicle-mounted device by the manufacturer of the first vehicle-mounted device, so that the first VTA subsequently performs verification on the trusted third party.

Optionally, the identification information of the trusted third party may be carried in the second voucher request. Certainly, the identification information of the trusted third party may be alternatively used as separate information and sent to the first VTA by the first vehicle-mounted device. This is not limited in this embodiment of this application.

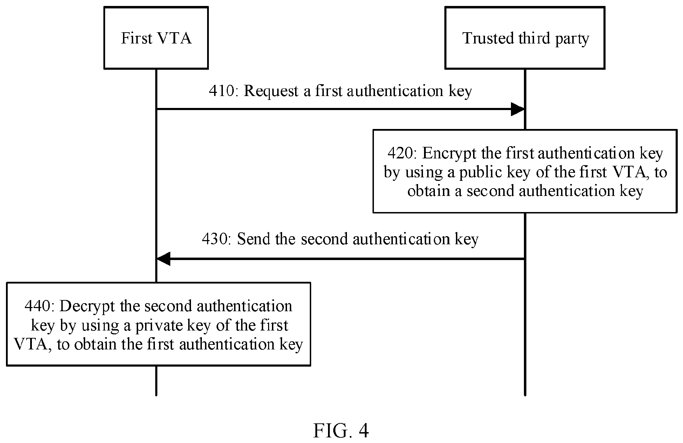

Usually, to ensure security of communication between the first vehicle-mounted device and the first VTA, an authentication key needs to be configured for the first vehicle-mounted device and the first VTA. This application further provides a method for automatically configuring an authentication key for the first vehicle-mounted device and the first VTA. To be specific, the authentication key is configured for the first VTA by using a trusted third party, and the authentication key is built-in in the first vehicle-mounted device. In this way, a process of automatically configuring the authentication key between the first vehicle-mounted device and the first VTA can be implemented. However, in the foregoing process of automatically configuring the authentication key, how to improve security of the authentication key in a transmission process is a key concern of this application. With reference to FIG. 4, the following describes how to improve security of the authentication key during transmission in the process of configuring the authentication key based on the trusted third party.

FIG. 4 is a flowchart of a method for configuring an authentication key according to an embodiment of this application. The method shown in FIG. 4 includes steps 410 to 440.

410: The first VTA requests a first authentication key from the trusted third party. The first authentication key is an authentication key used by the first VTA to communicate with the first vehicle-mounted device.

A first authentication key of the first vehicle-mounted device may be sent to the trusted third party by the manufacturer of the first vehicle-mounted device, so that the first authentication key is subsequently configured for the first VTA and is used as an authentication key for communication between the first VTA and the first vehicle-mounted device.

420: The trusted third party encrypts the first authentication key by using a public key of the first VTA, to obtain a second authentication key.

A manner in which the trusted third party obtains the public key of the first VTA is not limited in this embodiment of this application. That the public key of the first VTA is prestored on the trusted third party may be understood as that the manufacturer of the vehicle in which the first VTA is located prestores the public key of the first VTA on the trusted third party. That the public key of the first VTA is prestored on the trusted third party may be also understood as that the first VTA sends the public key of the first VTA to the trusted third party. For example, the first VTA may directly send a certificate carrying the public key of the first VTA to the trusted third party. Optionally, the certificate may be carried in a request used to request the first authentication key, or may be sent by the first VTA to the trusted third party as independent information.

430: The trusted third party sends the second authentication key to the first VTA.

440: The first VTA decrypts the second authentication key by using a private key of the first VTA, to obtain the first authentication key.

Optionally, a third authentication key used by the first vehicle-mounted device in a process of communicating with the first VTA may be built-in in the first vehicle-mounted device by the manufacturer of the first vehicle-mounted device.

It should be noted that the first authentication key and the third authentication key may be symmetric keys, or may be asymmetric keys. This is not limited in this embodiment of this application.

In this embodiment of this application, the trusted third party encrypts the first authentication key by using the public key of the first VTA, and sends the second authentication key obtained after encryption to the first VTA, so that the first VTA decrypts the second authentication key based on the private key of the first VTA, to obtain the first authentication key. This helps improve security of a process in which the trusted third party configures the first authentication key for the first VTA.

Because the third authentication key is built-in in the first vehicle-mounted device, after the first VTA obtains the first authentication key, it may be understood that a process of configuring the authentication key between the first VTA and the first vehicle-mounted device ends. However, to further verify whether the first authentication key obtained by the first VTA is accurate, the first VTA may send first information to the first vehicle-mounted device, and the first information is obtained by encrypting second information by using the first authentication key. The second information is information known to the first vehicle-mounted device and the first VTA. In this way, when information obtained by the first vehicle-mounted device by decrypting the first information by using the third authentication key is the second information, it can be determined that the first authentication key obtained by the first VTA and the third authentication key of the first vehicle-mounted device are paired authentication keys, and the authentication key is successfully configured.

Usually, if the first authentication key is directly stored on the trusted third party, an attacker may easily obtain the first authentication key, resulting in reducing security of the first authentication key. To avoid the foregoing problem, the trusted third party may store an initial authentication key. When needing to configure the first authentication key for the first VTA, the trusted third party may generate the first authentication key *dkey* based on an original key *key,* a prestored first key derivation function (key derivation function, KDF), and a first nonce *n*, that is, *dkey = KDF*(*key, n*)*.*

Correspondingly, the first vehicle-mounted device may derive the third authentication key based on the foregoing method, to ensure that the third authentication key matches the first authentication key.

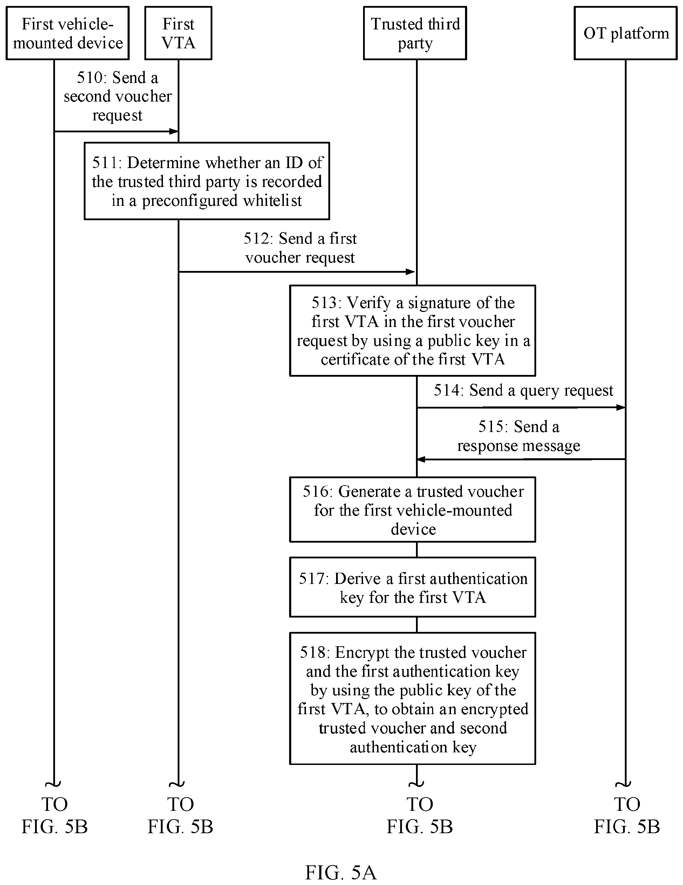

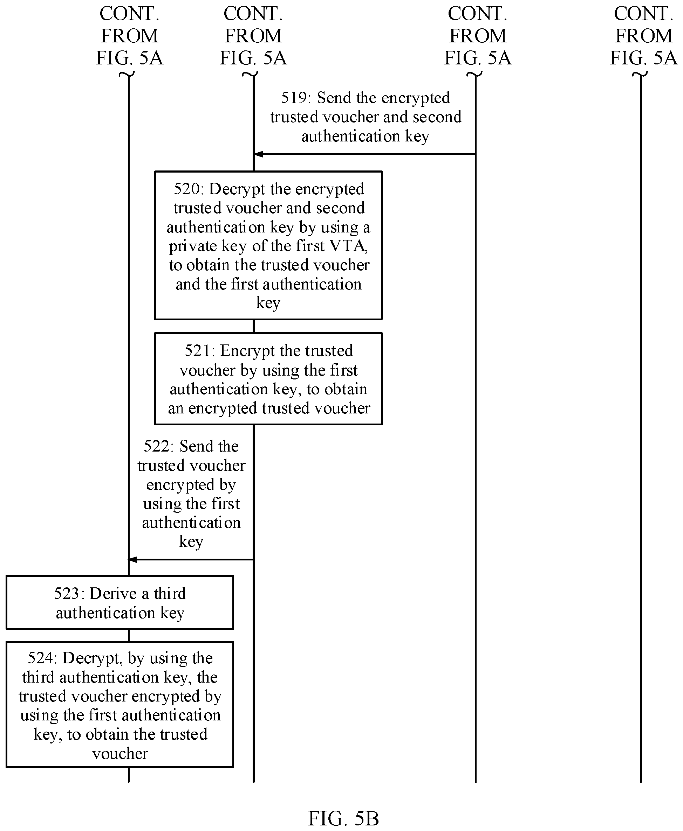

It should be noted that the process of configuring the authentication key shown in FIG. 4 may be used in combination with the authentication process shown in FIG. 2. In this case, the second information may be the trusted voucher in the method shown in FIG. 2. With reference to FIG. 5A and FIG. 5B, the following describes solutions in embodiments of this application by using an example in which a key configuration process is combined with the authentication process.

FIG. 5A and FIG. 5B are a flowchart of an initial authentication method for a vehicle-mounted device and a VTA according to an embodiment of this application. The method shown in FIG. 5A and FIG. 5B includes steps 510 to 524.

It is assumed that a first initial key and information about a trusted third party are built-in in a first vehicle-mounted device during the delivery of the first vehicle-mounted device. The information about the trusted third party includes a uniform resource locator (uniform resource locator, URL) of the trusted third party, a public key of the trusted third party, and an ID of the trusted third party. In addition, the first vehicle-mounted device is configured to be capable of recognizing a trusted voucher issued by the trusted third party. A certificate (for example, an X. 509v3 certificate) of a first VTA is built-in in the first VTA.

510: The first vehicle-mounted device sends a second voucher request to the first VTA. The second voucher request is used to request a trusted voucher for the first vehicle-mounted device. The second voucher request may include an ID of the first vehicle-mounted device that is used to identify the first vehicle-mounted device, a first nonce, and the information about the trusted third party.

511: The first VTA determines whether the ID of the trusted third party is recorded in a preconfigured whitelist. If the ID of the trusted third party is recorded in the preconfigured whitelist, step 512 is performed. If the ID of the trusted third party is not recorded in the preconfigured whitelist, the second voucher request is rejected.

512: The first VTA sends a first voucher request to the trusted third party. The first voucher request is used to request the trusted voucher for the first vehicle-mounted device. The first trusted voucher request may include an ID of the first VTA, the ID of the first vehicle-mounted device, the certificate of the first VTA, and the first nonce.

Usually, to prevent the first voucher request from being tampered with by a masquerader, the first VTA may use a private key of the first VTA to sign the first voucher request.

513: The trusted third party verifies the signature of the first VTA in the first voucher request by using a public key in the certificate of the first VTA. If the verification fails, the first voucher request may be tampered with by an attacker, and the trusted third party rejects the first voucher request. If the verification succeeds, step 514 is performed.

514: The trusted third party sends a query request to an OT platform. The query request is used to query whether there is a first homing relationship between the first vehicle-mounted device and the first VTA. The first homing relationship is used to indicate that the first vehicle-mounted device is mounted in a vehicle in which the first VTA is located.

Optionally, the query request may carry the ID of the first VTA and the ID of the first vehicle-mounted device.

515: The OT platform sends a response message to the trusted third party. The response message is used to indicate whether there is the first homing relationship between the first vehicle-mounted device and the first VTA. If there is the first homing relationship between the first vehicle-mounted device and the first VTA, step 516 is performed. If there is no first homing relationship between the first vehicle-mounted device and the first VTA, the trusted third party rejects the first voucher request.

516: The trusted third party generates the trusted voucher for the first vehicle-mounted device.

Optionally, the trusted voucher carries the first nonce in the first voucher request, to indicate that the trusted voucher is requested by the first voucher request that carries the first nonce.

Optionally, the trusted voucher may carry the first homing relationship, to indicate that there is the first homing relationship between the first vehicle-mounted device and the first VTA. This helps two-way authentication for the first vehicle-mounted device and the first VTA.

517: The trusted third party derives a first authentication key for the first VTA.

Optionally, the trusted third party generates a first authentication key *dkey* based on a prestored first initial key *key* of the first vehicle-mounted device, a first KDF, and a first nonce *n,* that is, *dkey = KDF*(*key, n*)*.*

518: The trusted third party encrypts the trusted voucher and the first authentication key *dkey* by using the public key of the first VTA, to obtain an encrypted trusted voucher and second authentication key.

519: The trusted third party sends the encrypted trusted voucher and second authentication key to the first VTA.

520: The first VTA decrypts the encrypted trusted voucher and the second authentication key by using the private key of the first VTA, to obtain the trusted voucher and the first authentication key.

521: The first VTA encrypts the trusted voucher by using the first authentication key, to obtain an encrypted trusted voucher.

522: The first VTA sends, to the first vehicle-mounted device, the trusted voucher encrypted by using the first authentication key.

523: The first vehicle-mounted device derives a third authentication key.

Optionally, the first vehicle-mounted device generates a third authentication key *dkey'* based on the prestored first initial key *key,* the first KDF, and the first nonce *n*, that is, *dkey' = KDF*(*key, n*). The third authentication key and the first authentication key are symmetric keys.

524: The first vehicle-mounted device decrypts, by using the third authentication key, the trusted voucher encrypted by using the first authentication key, to obtain the trusted voucher.

It should be noted that, during delivery of the first vehicle-mounted device, the first vehicle-mounted device may be configured with a function of recognizing the trusted voucher. After the first vehicle-mounted device correctly recognizes the trusted voucher, the foregoing security authentication process ends, and the first vehicle-mounted device is connected to the vehicle in which the first VTA is located. When the first vehicle-mounted device does not recognize the trusted voucher, the foregoing security authentication process ends, and the first vehicle-mounted device is not connected to the vehicle in which the first VTA is located.

Certainly, the foregoing step 522 may be replaced with a step in which the first VTA generates a message authentication code (message authentication code, MAC) for the trusted voucher by using the first authentication key, and sends the MAC to the first vehicle-mounted device, so that the first vehicle-mounted device verifies accuracy of the first authentication key.

It should be noted that the MAC may be understood as a verifiable digest that is obtained by performing specific computing on the trusted voucher based on the first authentication key.

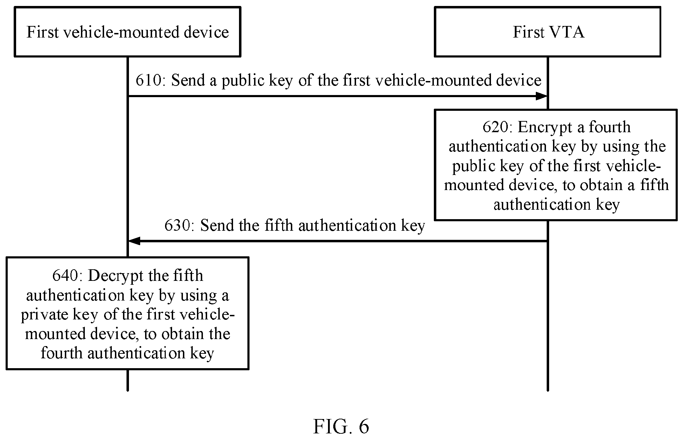

This application further provides a solution for automatically configuring a key. In a key configuration process described in this solution, a first VTA generates an authentication key for a first vehicle-mounted device, and configures the generated authentication key for the first vehicle-mounted device. In this way, a trusted third party may no longer store an initial key, to reduce burden of the trusted third party. However, as described above, in the foregoing process of automatically configuring the authentication key, how to improve security of the authentication key in a transmission process is a key concern of this application. With reference to FIG. 6, the following describes how to improve security of the authentication key during transmission in the process of configuring the authentication key according to another embodiment of this application.

FIG. 6 is a flowchart of a method for configuring an authentication key according to another embodiment of this application. The method shown in FIG. 6 includes steps 610 to 640.

610: A first vehicle-mounted device sends a public key of a first vehicle-mounted device to a first VTA.

Optionally, a certificate (for example, X.509v3) may be built-in in the first vehicle-mounted device during delivery, and the certificate may carry the public key. The foregoing step 610 may include: The first vehicle-mounted device sends the certificate to the first VTA. The certificate carries the public key of the first vehicle-mounted device.

620: The first VTA encrypts a fourth authentication key by using the public key of the first vehicle-mounted device, to obtain a fifth authentication key. The fourth authentication key is an authentication key used by the first vehicle-mounted device to communicate with the first VTA.

It should be noted that the fourth authentication key may be directly stored in the first VTA, or the fourth authentication key may be derived by the first VTA for the first vehicle-mounted device based on a prestored KDF. For a specific derivation process, refer to the following descriptions. A manner in which the first VTA obtains the fourth authentication key is not specifically limited in this embodiment of this application.

630: The first VTA sends the fifth authentication key to the first vehicle-mounted device.

640: The first vehicle-mounted device decrypts the fifth authentication key by using a private key of the first vehicle-mounted device, to obtain the fourth authentication key.

In a subsequent communication process of the first vehicle-mounted device and the first VTA, both the first vehicle-mounted device and the first VTA may encrypt the communication process by using the fourth authentication key, to improve security of the communication process of the first vehicle-mounted device and the first VTA.

In this embodiment of this application, the public key of the first vehicle-mounted device and the private key of the first vehicle-mounted device are built-in in the first vehicle-mounted device, so that the first vehicle-mounted device may send the public key to the first VTA. In this way, the first VTA can encrypt the fourth authentication key by using the public key of the first vehicle-mounted device. This helps improve security during transmission of the fourth authentication key.

To improve security of storing the authentication key by the first VTA, the first VTA may derive the fourth authentication key for the first vehicle-mounted device in real time. To be specific, before step 620, the method further includes: The first vehicle-mounted device sends a second nonce to the first VTA. The first VTA derives the fourth authentication key for the first vehicle-mounted device based on the second nonce, a second KDF, and a second initial key.

The first VTA generates a fourth authentication key *dkey'* based on a prestored second nonce *n', a* second initial key *key',* and the second KDF, that is, *dkey' = KDF'*(*key', n'*)*. KDF'* represents the second KDF.

The second nonce may be transmitted together with the public key of the first vehicle-mounted device in step 610. In other words, the second nonce and the public key of the first vehicle-mounted device are carried in one message, to reduce transmission resources occupied for transmitting the message. Certainly, the second nonce may be alternatively transmitted by using a separate message. This is not limited in this embodiment of this application.

In this embodiment of this application, the first VTA generates the fourth authentication key for the first vehicle-mounted device based on the second nonce sent by the first vehicle-mounted device in real time, to improve security of the fourth authentication key.

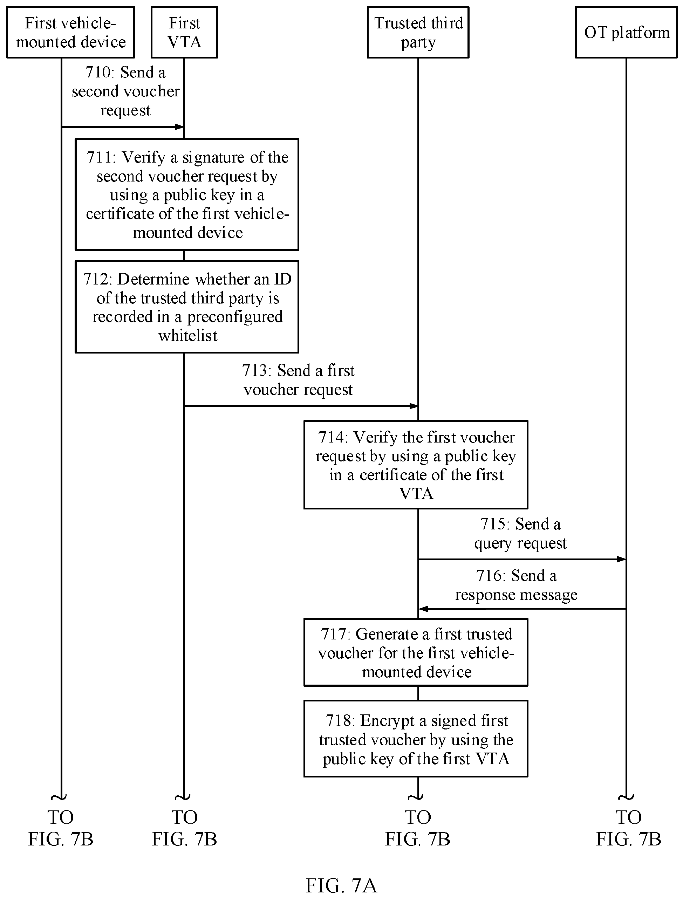

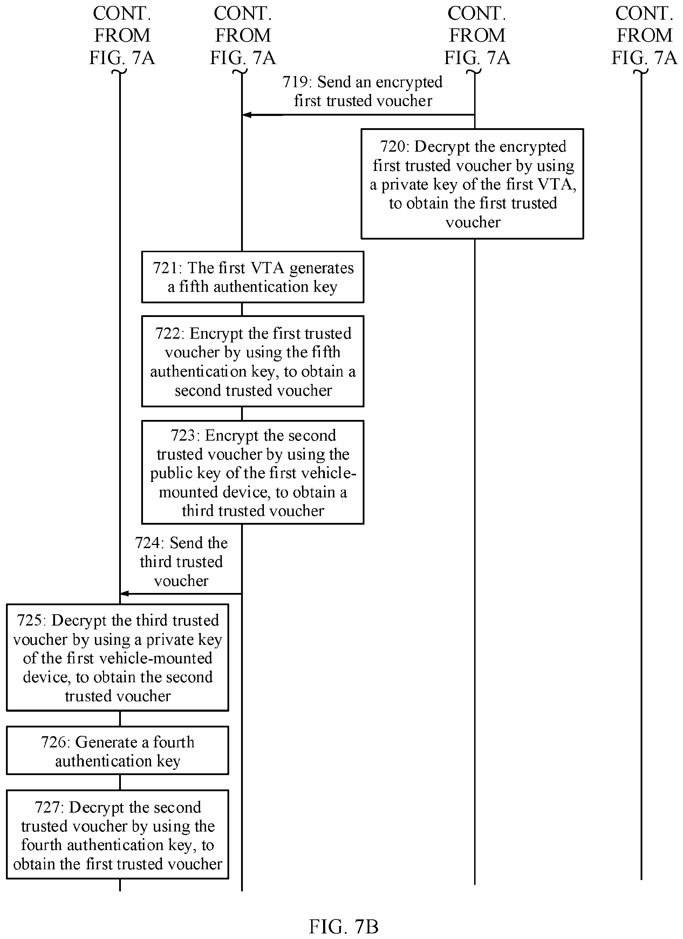

The foregoing process of configuring the authentication key shown in FIG. 6 may be used in combination with the authentication process shown in FIG. 2. For example, the public key of the first vehicle-mounted device in step 610 may be carried in the second voucher request in step 210. With reference to FIG. 7A and FIG. 7B, the following specifically describes a solution for combining the key configuration process shown in FIG. 6 with the authentication process shown in FIG. 2.

FIG. 7A and FIG. 7B are a schematic flowchart of an initial authentication method for a vehicle-mounted device and a VTA according to another embodiment of this application. The method shown in FIG. 7A and FIG. 7B includes steps 710 to 727.

It is assumed that a certificate of a first vehicle-mounted device and information about a trusted third party are built-in in the first vehicle-mounted device during delivery. The information about the trusted third party includes a URL of the trusted third party, a public key of the trusted third party, and an ID of the trusted third party. In addition, the first vehicle-mounted device is configured to be capable of recognizing a first trusted voucher issued by the trusted third party. A certificate of a first VTA is built-in in the first VTA.

710: The first vehicle-mounted device sends a second voucher request to the first VTA. The second voucher request is used to request a first trusted voucher for the first vehicle-mounted device. The second voucher request may include an ID of the first vehicle-mounted device that is used to identify the first vehicle-mounted device, a second nonce, the information about the trusted third party, and the certificate of the first vehicle-mounted device.

Usually, to prevent the second voucher request from being tampered with by an attacker, the first vehicle-mounted device may sign the second voucher request by using a private key of the first vehicle-mounted device.

711: The first VTA verifies the signature of the second voucher request by using a public key in the certificate of the first vehicle-mounted device, and rejects the second voucher request if the signature verification fails. If the signature verification succeeds, the first VTA performs step 712.

712: The first VTA determines whether the ID of the trusted third party is recorded in a preconfigured whitelist. If the ID of the trusted third party is recorded in the preconfigured whitelist, step 713 is performed. If the ID of the trusted third party is not recorded in the preconfigured whitelist, the second voucher request is rejected.

713: The first VTA sends a first voucher request to the trusted third party. The first voucher request is used to request the first trusted voucher for the first vehicle-mounted device. The first voucher request includes an ID of the first VTA that is used to identify the first VTA, the ID of the first vehicle-mounted device that is used to identify the first vehicle-mounted device, the second nonce, and the certificate of the first VTA.

As described above, to prevent the attacker from tampering with the first voucher request, the first VTA may sign the first voucher request by using a private key of the first VTA.

714: The trusted third party verifies the first voucher request by using a public key in the certificate of the first VTA. If the verification succeeds, step 715 is performed; or if the verification fails, the first voucher request is rejected.

715: The trusted third party sends a query request to an OT platform. The query request is used to query whether there is a first homing relationship between the first vehicle-mounted device and the first VTA. The first homing relationship is used to indicate that the first vehicle-mounted device is mounted in a vehicle in which the first VTA is located.

Optionally, the query request may carry the ID of the first VTA and the ID of the first vehicle-mounted device.

716: The OT platform sends a response message (namely, the foregoing query result) to the trusted third party. The response message is used to indicate whether there is the first homing relationship between the first vehicle-mounted device and the first VTA. If there is the first homing relationship between the first vehicle-mounted device and the first VTA, step 717 is performed; or if there is no first homing relationship between the first vehicle-mounted device and the first VTA, the trusted third party rejects the first voucher request.

717: The trusted third party generates the first trusted voucher for the first vehicle-mounted device.

Optionally, the first trusted voucher carries the second nonce in the first voucher request, to indicate that the first trusted voucher is requested by the first voucher request that carries the second nonce. This helps prevent the attacker from forging the first trusted voucher.

In addition, to prevent the attacker from tampering with the first trusted voucher, the trusted third party may sign the first trusted voucher by using a private key of the trusted third party.

718: The trusted third party encrypts a signed first trusted voucher by using a public key of the first VTA. An encrypted first trusted voucher may be represented as En(Voucher₁, Pub_VTA). En() represents an encryption operation, and Pub_VTA represents the public key of the first VTA.

719: The trusted third party sends the encrypted first trusted voucher to the first VTA.

720: The first VTA decrypts the encrypted first trusted voucher by using the private key of the first VTA, to obtain the first trusted voucher.

If the first trusted voucher is signed by using the private key of the trusted third party, the first VTA may perform verification on the first trusted voucher based on the public key of the trusted third party. If the verification succeeds, step 721 is performed. If the verification fails, the first VTA discards the first trusted voucher and refuses to communicate with the first vehicle-mounted device.

721: The first VTA generates a fifth authentication key.

The first VTA generates the fifth authentication key in a plurality of manners. For example, the first VTA generates a fifth authentication key *dkey'* based on a second nonce *n' ,* a second initial key *key',* and a second KDF, that is, *dkey' = KDF'*(*key', n'*)*. KDF'* represents the second KDF. For another example, the first VTA may alternatively generate a fifth authentication key *dkey'* based on the ID of the first vehicle-mounted device, a second nonce *n',* a second initial key *key',* and a second KDF.

722: The first VTA encrypts the first trusted voucher by using the fifth authentication key, to obtain a second trusted voucher.

723: The first VTA encrypts the second trusted voucher by using the public key of the first vehicle-mounted device, to obtain a third trusted voucher. To be specific, a third trusted voucher Voucher3 may be represented as Voucher₃=En(Voucher₂, Key). En() represents an encryption operation, Key represents the fifth authentication key, and Voucher₂ represents the second trusted voucher.

724: The first VTA sends the third trusted voucher to the first vehicle-mounted device.

725: The first vehicle-mounted device decrypts the third trusted voucher by using the private key of the first vehicle-mounted device, to obtain the second trusted voucher.

726: The first vehicle-mounted device generates a fourth authentication key. The fourth authentication key and the fifth authentication key are symmetric keys, and the fourth authentication key is an authentication key used by the first vehicle-mounted device when the first vehicle-mounted device communicates with the first VTA.

Because the fifth authentication key and the fourth authentication key are symmetric keys, a manner in which the first vehicle-mounted device generates the fourth authentication key is the same as a manner in which the first VTA generates the fifth authentication key. For example, the fifth authentication key is generated based on the second nonce, a second initial key, and the second KDF. In this case, the fourth authentication key may be also generated based on the second nonce, the second initial key, and the second KDF. For another example, the fifth authentication key is generated based on the ID of the first vehicle-mounted device, the second nonce, a second initial key, and the second KDF. In this case, the fourth authentication key is also generated based on the ID of the first vehicle-mounted device, the second nonce, the second initial key, and the second KDF.

727: The first vehicle-mounted device decrypts the second trusted voucher by using the fourth authentication key, to obtain the first trusted voucher.

In this case, if the first vehicle-mounted device successfully performs decryption, and can recognize the first trusted voucher, a security authentication process between the first vehicle-mounted device and the first VTA ends. The first vehicle-mounted device may communicate with the first VTA by using the fourth authentication key, and the first VTA may communicate with the first vehicle-mounted device by using the fifth authentication key. If the first vehicle-mounted device fails in decryption and cannot recognize the trusted voucher, a security authentication process between the first vehicle-mounted device and the first VTA ends, and an authentication key configuration process between the first vehicle-mounted device and the first VTA fails.

To ensure security of communication between each vehicle-mounted device and the VTA, the trusted third party or the first VTA needs to store an authentication key of each vehicle-mounted device. However, as a quantity of vehicle-mounted devices in the vehicle increases, the trusted third party or the first VTA needs to store an increasing quantity of authentication keys. Consequently, a storage load of the trusted third party or the first VTA is heavy.

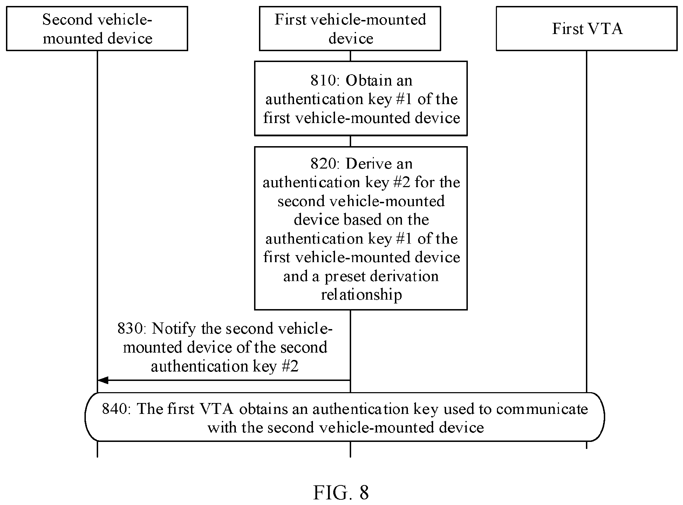

To avoid the foregoing problem, this application provides a new method for deriving an authentication key, so that a derivation relationship exists between authentication keys of different vehicle-mounted devices in the vehicle. In this way, the first VTA or the trusted third party only needs to store a "root authentication key" that can be used to derive an authentication key of another vehicle-mounted device, and does not need to store the authentication key of each vehicle-mounted device. When the first VTA or the trusted third part needs to obtain an authentication key of a target vehicle-mounted device, the first VTA or the trusted third party may derive the authentication key of the target vehicle-mounted device based on the "root authentication key" and a known derivation relationship. In other words, there is a hierarchical relationship between authentication keys of vehicle-mounted devices in the vehicle. An authentication key (namely, a root authentication key) of a vehicle-mounted device of a first hierarchy may be used to derive an authentication key of a vehicle-mounted device of a second hierarchy by using the known derivation relationship. With reference to FIG. 8, the following describes a process of deriving an authentication key in embodiments of this application by using an example in which there is a derivation relationship between an authentication key #1 of a first vehicle-mounted device and an authentication key #2 of a second vehicle-mounted device.

FIG. 8 is a flowchart of a method for deriving an authentication key according to an embodiment of this application. The method shown in FIG. 8 includes steps 810 to 840.

810: The first vehicle-mounted device obtains the authentication key #1 of the first vehicle-mounted device.

A method for obtaining the authentication key #1 by the first vehicle-mounted device is not specifically limited in this application. The method shown in FIG. 8 may be used in combination with any method in FIG. 4 to FIG. 7B. For example, the authentication key #1 of the first vehicle-mounted device may be obtained based on the authentication key configuration process shown in FIG. 4. In this case, the authentication key #1 of the first vehicle-mounted device may be the foregoing third authentication key. For another example, the authentication key #1 of the first vehicle-mounted device may be obtained based on the authentication key configuration process shown in FIG. 5A and FIG. 5B. In this case, the authentication key #1 of the first vehicle-mounted device may be the foregoing third authentication key. For another example, the authentication key #1 of the first vehicle-mounted device may be obtained based on the authentication key configuration process shown in FIG. 6. In this case, the authentication key #1 of the first vehicle-mounted device may be the foregoing fourth authentication key. For another example, the authentication key #1 of the first vehicle-mounted device may be obtained based on the authentication key configuration process shown in FIG. 7A and FIG. 7B. In this case, the authentication key #1 of the first vehicle-mounted device may be the foregoing fifth authentication key. Certainly, the method shown in FIG. 8 may not be alternatively combined with any method in FIG. 4 to FIG. 7B, and the authentication key #1 of the first vehicle-mounted device may be built-in in the first vehicle-mounted device.

820: The first vehicle-mounted device derives the authentication key #2 for the second vehicle-mounted device based on the authentication key #1 of the first vehicle-mounted device and a preset derivation relationship.

830: The first vehicle-mounted device notifies the second vehicle-mounted device of the second authentication key #2.

Optionally, to improve security of the authentication key in a process of transmitting the second authentication key #2, the second authentication key #2 may be encrypted by using a public key of the second vehicle-mounted device, and an encrypted second authentication key is sent to the second vehicle-mounted device. Correspondingly, the second vehicle-mounted device may decrypt the encrypted second authentication key by using a private key of the second vehicle-mounted device, to obtain the second authentication key #2.

It should be understood that the public key of the second vehicle-mounted device may be sent by the second vehicle-mounted device to the first vehicle-mounted device by using a certificate.

840: A first VTA obtains an authentication key used to communicate with the second vehicle-mounted device.

Optionally, there are a plurality of methods for obtaining, by the first VTA, the authentication key used to communicate with the second vehicle-mounted device. This is not limited in this embodiment of this application. For example, the first vehicle-mounted device may notify the first VTA of the authentication key #2. For another example, the second vehicle-mounted device may notify the first VTA of the obtained authentication key #2. In this way, the first VTA may communicate with the second vehicle-mounted device by using the authentication key #2.

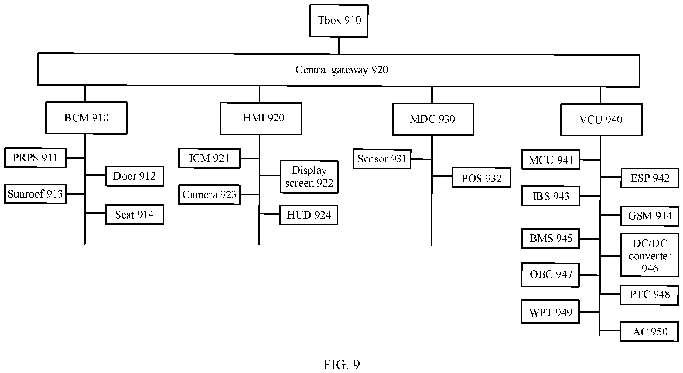

Optionally, to reduce complexity of configuring a hierarchical relationship between authentication keys of vehicle-mounted devices, a hierarchical relationship between the vehicle-mounted devices in a vehicle may be directly used as the hierarchical relationship between the authentication keys of the vehicle-mounted devices. Certainly, a hierarchical relationship may be separately configured for the authentication keys of the vehicle-mounted devices. This is not limited in this embodiment of this application. The following uses a hierarchical relationship between vehicle-mounted devices shown in FIG. 9 as an example to describe a derivation relationship between authentication keys in embodiments of this application. It should be understood that, in the hierarchical relationship shown in FIG. 9, only a hierarchical relationship between some vehicle-mounted devices is illustrated as an example. The hierarchical key solution in this embodiment of this application may be further applicable to another vehicle-mounted device that is not illustrated in FIG. 9.

FIG. 9 is a schematic diagram of a hierarchical relationship between vehicle-mounted devices in a vehicle. The vehicle shown in FIG. 9 includes a telematics box (Telematics BOX, Tbox) 910 and a central gateway 920. The Tbox 910 is configured to communicate with an external network of a vehicle, and send information to various control units by using the central gateway 920. The control units may include a body control module (Body Control Module, BCM) 910, a human-machine interaction (Human-Machine Interaction, HMI) controller 920, a mobile data center (Mobile Data Center, MDC) 930 in the vehicle, a vehicle control unit (Vehicle control unit, VCU) 940, and the like.

The BCM 910 is configured to provide a management and control function for vehicle-mounted devices such as a passive entry passive start (Passive Entry Passive Start,PEPS) system (also referred to as a "keyless entry and start system") 911 of the vehicle, a door 912 of the vehicle, a sunroof 913 of the vehicle, and a seat 914 in the vehicle.

The HMI 920 is configured to provide a management and control function for an ignition control module (ignition control module, ICM) 921, a display 922, a camera 923, a head-up display (Head-Up Display, HUD) 924, and the like.

The MDC 930 is configured to provide a management and control function for a sensor 931, a position & orientation system (Position & Orientation System, POS) 932, and the like. The sensor 931 may include a radar, a camera, a laser, and the like.

The VCU 940 is configured to provide a management and control function for a microcontroller unit (Microcontroller Unit, MCU) 941, an electronic stability program (Electronic Stability Program, ESP) 942, an intelligent braking system (Intelligent Braking System, IBS) 943, a safety assistance system (safety assistance system, SAS) 944, a GSM 944, a BMS 945, a DC/DC converter (Direct current-Direct current converter) 946, an on-board controller (On-Board Controller, OBC) 947, a positive temperature coefficient (Positive Temperature Coefficient, PTC) 948, a wireless power transmission (Wireless Power Transmission, WPT) 949, an air conditioner (air conditioner, AC) 950, and the like.

A derivation relationship between authentication keys of the vehicle-mounted devices may be established based on the hierarchical relationship of the foregoing vehicle-mounted devices. For example, an authentication key of the PRPS 911 may be derived by using an authentication key of the BCM 910. An authentication key of the door 912 may be derived by using the authentication key of the BCM 910. An authentication key of the sunroof 913 may be derived by using the authentication key of the BCM 910 An authentication key of the seat 914 may be derived by using the authentication key of the BCM 910.

An authentication key of the ICM 921 may be derived by using an authentication key of the HMI 920. An authentication key of the display 922 may be derived by using the authentication key of the HMI 920. An authentication key of the camera 923 may be derived by using the authentication key of the HMI 920. An authentication key of the HUD 924 may be derived by using the authentication key of the HMI 920.

An authentication key of the sensor 931 may be derived by using an authentication key of the MDC 930. An authentication key of the POS 932 may be derived by using the authentication key of the MDC 930.

An authentication key of the MCU 941 may be derived by using an authentication key of the VCU 940. An authentication key of the ESP 942 may be derived by using the authentication key of the VCU 940. An authentication key of the IBS 943 may be derived by using the authentication key of the VCU 940. An authentication key of the SAS 944 may be derived by using the authentication key of the VCU 940. An authentication key of the GSM 944 may be derived by using the authentication key of the VCU 940. An authentication key of the BMS 945 may be derived by using the authentication key of the VCU 940. An authentication key of the DC/DC converter 946 may be derived by using the authentication key of the VCU 940. An authentication key of the OBC 947 may be derived by using the authentication key of the VCU 940. An authentication key of the PTC 948 may be derived by using the authentication key of the VCU 940. An authentication key of the WPT 949 may be derived by using the authentication key of the VCU 940. An authentication key of the AC 950 may be derived by using the authentication key of the VCU 940.

Optionally, there may be a derivation relationship between the authentication keys of the control units: the BCM 910, the HMI 920, the MDC 930 and the VCU 940. For example, the authentication key of the BCM 910 may derive the authentication key of the HMI 920. The authentication key of the HMI 920 may derive the authentication key of the MDC 930. The authentication key of the MDC 930 may derive the authentication key of the VCU 940. Certainly, alternatively, there may be no derivation relationship between the authentication keys of the control units: the BCM 910, the HMI 920, the MDC 930 and the VCU 940. This is not limited in this embodiment of this application.

Optionally, the authentication key of the control unit: the BCM 910, the HMI 920, the MDC 930, or the VCU 940, may be alternatively derived by using a key of a first VTA. The key of the first VTA may be an initial key that is built-in in the first VTA, or an authentication key obtained after the first VTA negotiates with a first vehicle-mounted device. This is not limited in this embodiment of this application.

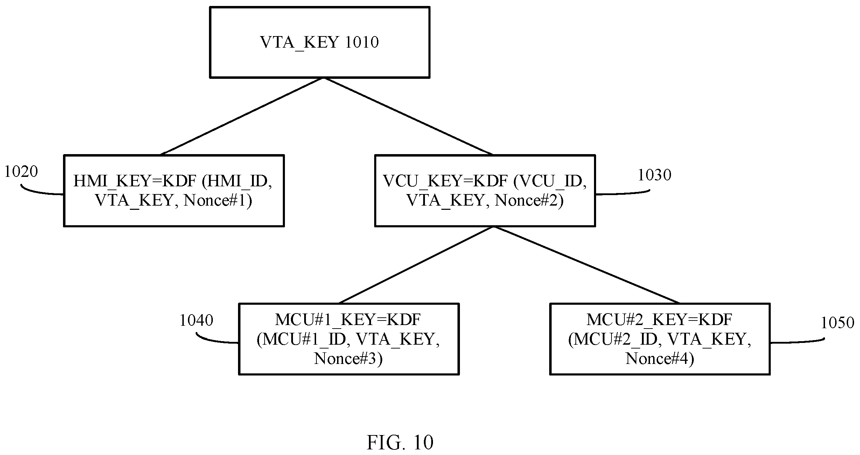

For a method for key derivation between the foregoing vehicle-mounted devices, refer to the foregoing descriptions of deriving the authentication key of the first vehicle-mounted device based on the initial key. The initial key may be considered as an authentication key of the foregoing control unit, and the derived authentication key of the first vehicle-mounted device may be considered as an authentication key of a vehicle-mounted device for which the control units provide a management and control function. For brevity, details are not described herein again. For ease of understanding, an example in which authentication keys of a VCU, an HMI, and an MCU are derived based on an authentication key of a first VTA is used below for description with reference to FIG. 10.

FIG. 10 is a schematic diagram of a derivation relationship between authentication keys of vehicle-mounted devices according to an embodiment of this application. It is assumed that an authentication key VTA_KEY of the first VTA has been configured for the first VTA, the first VTA receives a nonce Nonce#1 and an ID of the HMI (HMI_ID) that are sent by the HMI, the first VTAreceives a nonce Nonce#2 and an ID of the VCU (VCU_ID) that are sent by the VCU, the first VTA receives a nonce Nonce#3 and an ID (MCU#1_ID) of an MCU#1 that are sent by an MCU#1, and the first VTA receives a nonce Nonce#4 and an ID (MCU#2_ID) of an MCU#2 that are sent by an MCU#2.

The first VTA derives an HMI authentication key HMI_KEY 1020, that is, HMI_KEY=KDF (HMI_ID, VTA_KEY, Nonce#1), for the HMI based on a VTA_KEY 1010, the nonce Nonce#1, the HMI_ID, and a KDF.

The first VTA derives a VCU authentication key VCU_KEY 1030, that is, VCU_KEY=KDF (VCU_ID, VTA_KEY, Nonce#2), for the VCU based on the VTA_KEY 1010, the nonce Nonce#2, the VCU_ID, and the KDF.

The first VTA derives an MCU#1_KEY 1040, that is, MCU#1_KEY=KDF (MCU#1_ID, VCU_KEY, Nonce#3), for the MCU#1 based on the VCU_KEY 1030, the nonce Nonce#3, the MCU#1_ID, and the KDF.

The first VTA derives an MCU#2_KEY 1050, that is, MCU#2_KEY=KDF (MCU#2_ID, VCU_KEY, Nonce#4), for the MCU#2 based on the VCU_KEY 1030, the nonce Nonce#4, the MCU#2_ID, and the KDF.

It should be noted that the authentication keys of the MCU #1 and the MCU #2 may be alternatively derived by the VCU. This is not specifically limited in this embodiment of this application.

It should be understood that, after the first VTA derives the authentication keys for the VCU, the HMI, the MCU#1, and the MCU#2, to improve security of transmitting the authentication key, the authentication key may be encrypted by using a public key of a receiver of the authentication key, and an encrypted authentication key is sent to the receiver. Correspondingly, the receiver may decrypt the encrypted authentication key by using a private key. Certainly, if security of the authentication key in a transmission process is not considered, the derived authentication key may be alternatively directly sent to the receiver.

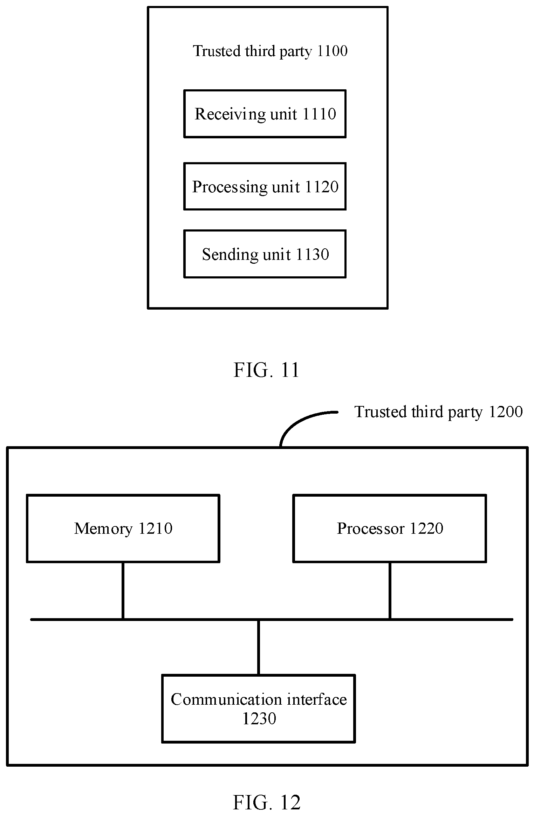

The foregoing describes methods in embodiments of this application with reference to FIG. 1 to FIG. 10. The following describes an apparatus in embodiments of this application with reference to FIG. 11 to FIG. 16. It should be noted that the apparatus shown in FIG. 11 to FIG. 16 may perform one or more steps in the foregoing solutions. For brevity, details are not described below again.

FIG. 11 is a schematic diagram of a trusted third party according to an embodiment of this application. A trusted third party 1100 in FIG. 11 includes a receiving unit 1110, a processing unit 1120, and a sending unit 1130.

The receiving unit 1110 is configured to receive a first voucher request sent by a first vehicle trust anchor VTA in a vehicle. The trusted third party stores an identifier ID of a vehicle-mounted device manufactured by one or more vehicle-mounted device manufacturers. The first voucher request is used to request a trusted voucher for a to-be-authenticated first vehicle-mounted device in the vehicle. The first voucher request carries an ID of the first vehicle-mounted device.

The processing unit 1120 is configured to determine that the ID of the first vehicle-mounted device received by the receiving unit corresponds to the ID of the vehicle-mounted device manufactured by the one or more vehicle-mounted device manufacturers.

The sending unit 1130 is configured to send the trusted voucher to the first VTA.

Optionally, in an embodiment, the first voucher request further carries an ID of the first VTA. The processing unit is further configured to determine, based on the ID of the first vehicle-mounted device and the ID of the first VTA, that there is a first homing relationship between the first vehicle-mounted device and the first VTA. The first homing relationship indicates that the first vehicle-mounted device is mounted in a vehicle corresponding to the first VTA.

Optionally, in an embodiment, the processing unit is further configured to: send a query request to an ownership tracker platform, where the ownership tracker platform is configured to record the first homing relationship, the query request is used to request to query the first homing relationship, and the query request carries the ID of the first vehicle-mounted device and the ID of the first VTA; and receive the first homing relationship sent by the ownership tracker platform.

Optionally, in an embodiment, the processing unit is further configured to: obtain a first nonce of the first vehicle-mounted device; perform derivation based on the first nonce and a prestored first initial authentication key of the first vehicle-mounted device, to obtain a first authentication key, where the first authentication key is an authentication key used to perform security authentication between the first vehicle-mounted device and the first VTA; and configure the first authentication key for the first VTA.

Optionally, in an embodiment, the trusted third party is a manufacturer authorized signing authority MASA trusted by the one or more vehicle-mounted device manufacturers.

In an optional embodiment, the receiving unit 1110 and the sending unit 1130 each may be a communication interface 1230. The processing unit 1120 may be a processor 1220. The trusted third party may further include a memory 1210. Details are shown in FIG. 12.

FIG. 12 is a schematic block diagram of a trusted third party according to another embodiment of this application. A trusted third party 1200 shown in FIG. 12 may include the memory 1210, the processor 1220, and the communication interface 1230. The memory 1210, the processor 1220, and the communication interface 1230 are connected by using an internal connection path. The memory 1210 is configured to store instructions. The processor 1220 is configured to execute the instructions stored in the memory 1210, to control the communication interface 1230 to receive/send at least some parameters of a second channel model. Optionally, the memory 1210 may be coupled to the processor 1220 through an interface, or may be integrated with the processor 1220.

It should be noted that the communication interface 1230 implements communication between the trusted third party 1200 and another device or a communication network by using, for example but not limited to, a transceiver apparatus, for example, a transceiver. The communication interface 1230 may further include an input/output interface (input/output interface).

In an implementation process, the steps in the foregoing method may be completed by using an integrated logic circuit of hardware in the processor 1220 or instructions in a form of software. The method disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory 1210, and the processor 1220 reads information in the memory 1210 and completes the steps in the foregoing method in combination with hardware of the processor. To avoid repetition, details are not described herein again.

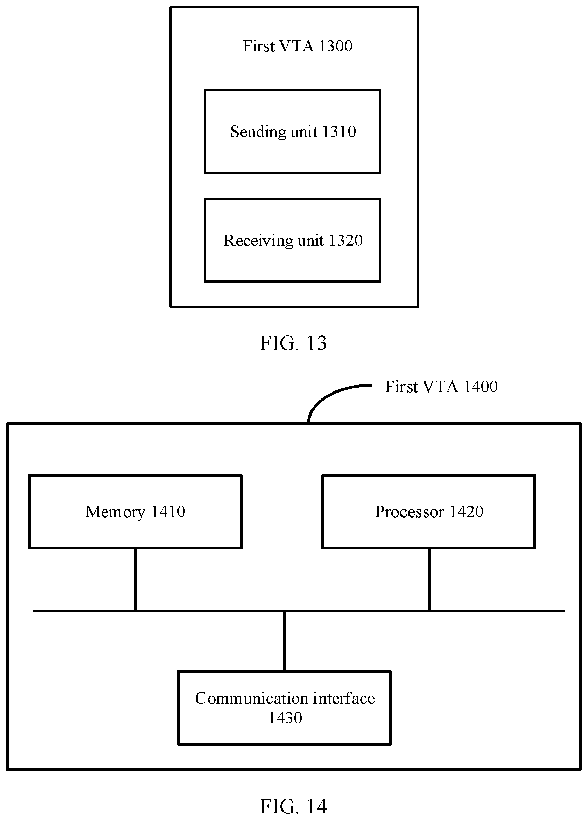

FIG. 13 is a schematic diagram of a first VTA according to an embodiment of this application. A first VTA 1300 shown in FIG. 13 includes a sending unit 1310 and a receiving unit 1320.

The sending unit 1310 is configured to send a first voucher request to a trusted third party. The trusted third party stores an identifier ID of a vehicle-mounted device manufactured by one or more vehicle-mounted device manufacturers. The first voucher request is used to request a trusted voucher for a to-be-authenticated first vehicle-mounted device in a vehicle, and the first voucher request carries an ID of the first vehicle-mounted device.

The receiving unit 1320 is configured to receive the trusted voucher, sent by the trusted third party, when the trusted third party determines that the ID of the first vehicle-mounted device corresponds to the ID of the vehicle-mounted device manufactured by the one or more vehicle-mounted device manufacturers.

Optionally, in an embodiment, the first voucher request further carries an ID of the first VTA. The ID of the first VTA is used by the trusted third party to determine that there is a first homing relationship between the first VTA and the first vehicle-mounted device, and the first homing relationship indicates that the first vehicle-mounted device is mounted in a vehicle corresponding to the first VTA.

Optionally, in an embodiment, the sending unit is further configured to send a first nonce of the first vehicle-mounted device to the trusted third party. The receiving unit is further configured to receive an encrypted first authentication key sent by the trusted third party. The encrypted first authentication key is obtained by encrypting a first authentication key by using a public key of the first VTA.

Optionally, in an embodiment, the first VTA further includes: a first processing unit, configured to decrypt the encrypted first authentication key by using a private key of the first VTA, to obtain the first authentication key. The first processing unit is further configured to encrypt the trusted voucher based on the first authentication key, to obtain an encrypted trusted voucher. The sending unit is further configured to send the encrypted trusted voucher to the first vehicle-mounted device.

Optionally, in an embodiment, the first processing unit is further configured to determine an authentication key of a second vehicle-mounted device in the vehicle based on the first authentication key and a prestored key hierarchical relationship. The key hierarchical relationship is used to indicate a derivation rule between the authentication key of the second vehicle-mounted device and the first authentication key.

Optionally, in an embodiment, the first VTA further includes a second processing unit. The receiving unit 1320 is further configured to receive a second nonce sent by the first vehicle-mounted device. The second processing unit is configured to perform derivation based on the second nonce and a prestored second initial authentication key of the first vehicle-mounted device, to obtain a second authentication key. The second authentication key is an authentication key used to perform security authentication between the first vehicle-mounted device and the first VTA. The second processing unit is further configured to configure the second authentication key for the first vehicle-mounted device.

Optionally, in an embodiment, the first VTA further includes a third processing unit. The third processing unit is configured to receive an ID of the trusted third party that is sent by the first vehicle-mounted device, and determine that an identifier of the trusted third party corresponds to a prestored whitelist. Identifiers of a plurality of trusted third parties that can be accessed by the first VTA are stored in the whitelist.

Optionally, the trusted third party is an MASA trusted by the one or more vehicle-mounted device manufacturers.

In an optional embodiment, the receiving unit 1320 and the sending unit 1310 each may be a communication interface 1430. The first processing unit, the second processing unit, and the third processing unit each may be a processor 1420. The first VTA may further include a memory 1410. Details are shown in FIG. 14.

FIG. 14 is a schematic block diagram of a first VTA according to another embodiment of this application. A first VTA 1400 shown in FIG. 14 may include the memory 1410, the processor 1420, and the communication interface 1430. The memory 1410, the processor 1420, and the communication interface 1430 are connected by using an internal connection path. The memory 1410 is configured to store instructions. The processor 1420 is configured to execute the instructions stored in the memory 1410, to control the communication interface 1430 to receive/send at least some parameters of a second channel model. Optionally, the memory 1410 may be coupled to the processor 1420 through an interface, or may be integrated with the processor 1420.

It should be noted that the communication interface 1430 implements communication between the first VTA 1400 and another device or a communication network by using, for example but not limited to, a transceiver apparatus, for example, a transceiver. The communication interface 1430 may further include an input/output interface (input/output interface).

In an implementation process, the steps in the foregoing method may be completed by using an integrated logic circuit of hardware in the processor 1420 or instructions in a form of software. The method disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory 1410, and the processor 1420 reads information in the memory 1410 and completes the steps in the foregoing method in combination with hardware of the processor. To avoid repetition, details are not described herein again.

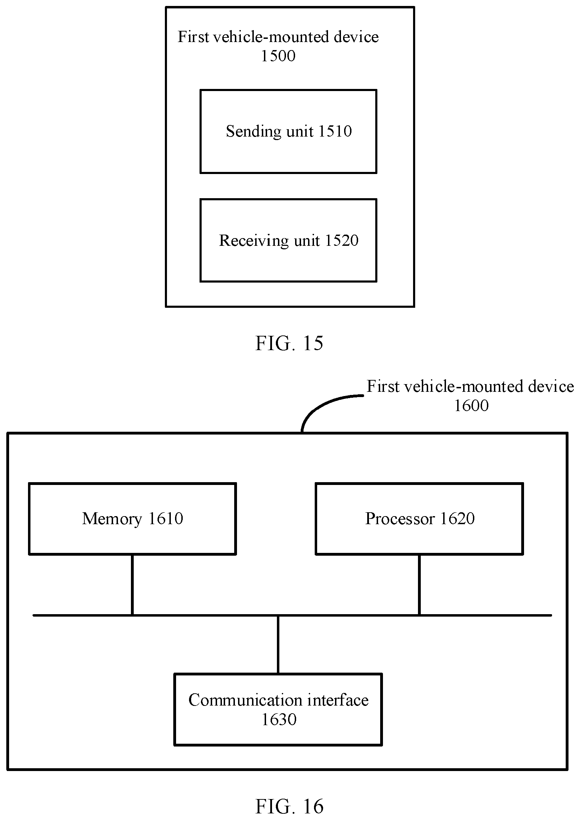

FIG. 15 is a schematic block diagram of a first vehicle-mounted device according to an embodiment of this application. A first vehicle-mounted device 1500 shown in FIG. 15 includes a sending unit 1510 and a receiving unit 1520.

The sending unit 1510 is configured to send a second voucher request to a first vehicle trust anchor VTA of a vehicle. The second voucher request is used to request a trusted voucher for a to-be-authenticated first vehicle-mounted device in the vehicle from a trusted third party. The trusted third party stores an identifier ID of a vehicle-mounted device manufactured by one or more vehicle-mounted device manufacturers. The second voucher request carries an ID of the first vehicle-mounted device.

The receiving unit 1520 is configured to receive, by using the first VTA, the trusted voucher, issued by the trusted third party, when the trusted third party determines that the ID of the first vehicle-mounted device corresponds to the ID of the vehicle-mounted device manufactured by the one or more vehicle-mounted device manufacturers.

Optionally, in an embodiment, the sending unit 1510 is further configured to send a first nonce of the first vehicle-mounted device to the first VTA. The first nonce is used to generate a first authentication key. The first authentication key is an authentication key used by the first VTA to perform security authentication between the first vehicle-mounted device and the first VTA.

Optionally, in an embodiment, the first vehicle-mounted device further includes a first processing unit. The first processing unit is configured to generate a third authentication key based on the first nonce and a prestored first initial authentication key. The third authentication key is an authentication key used by the first vehicle-mounted device to perform security authentication between the first vehicle-mounted device and the first VTA. The third authentication key and the first authentication key are symmetric keys.

Optionally, in an embodiment, the receiving unit 1520 is further configured to receive an encrypted trusted voucher sent by the first VTA. The encrypted trusted voucher is obtained by encrypting the trusted voucher based on the first authentication key. The first processing unit is further configured to decrypt the encrypted trusted voucher by using the third authentication key, to obtain the trusted voucher.

Optionally, in an embodiment, the first vehicle-mounted device further includes a second processing unit. The sending unit 1510 is further configured to send a second nonce of the first vehicle-mounted device to the first VTA. The second processing unit is further configured to obtain a second authentication key from the first VTA. The second authentication key is obtained by performing derivation based on the second nonce and a prestored second initial authentication key of the first vehicle-mounted device. The second authentication key is an authentication key used to perform security authentication between the first vehicle-mounted device and the first VTA.

Optionally, in an embodiment, the second processing unit is further configured to: receive an encrypted second authentication key sent by the first VTA, where the encrypted second authentication key is obtained by encrypting the second authentication key by using a public key of the first vehicle-mounted device; and decrypt the encrypted second authentication key by using a private key of the first vehicle-mounted device, to obtain the second authentication key.

Optionally, in an embodiment, the trusted third party is a manufacturer authorized signing authority MASA trusted by the one or more vehicle-mounted device manufacturers.

In an optional embodiment, the receiving unit 1520 and the sending unit 1510 may be a communication interface 1630. The foregoing processing units (for example, the first processing unit and/or the second processing unit) each may be a processor 1620. The first vehicle-mounted device may further include a memory 1610. Details are shown in FIG. 16.

FIG. 16 is a schematic block diagram of a first vehicle-mounted device according to another embodiment of this application. A first vehicle-mounted device 1600 shown in FIG. 16 may include the memory 1610, the processor 1620, and the communication interface 1630. The memory 1610, the processor 1620, and the communication interface 1630 are connected by using an internal connection path. The memory 1610 is configured to store instructions. The processor 1620 is configured to execute the instructions stored in the memory 1610, to control the communication interface 1630 to receive/send at least some parameters of a second channel model. Optionally, the memory 1610 may be coupled to the processor 1620 through an interface, or may be integrated with the processor 1620.

It should be noted that the communication interface 1630 implements communication between the first vehicle-mounted device 1600 and another device or a communication network by using, for example but not limited to, a transceiver apparatus, for example, a transceiver. The communication interface 1630 may further include an input/output interface (input/output interface).

In an implementation process, the steps in the foregoing method may be completed by using an integrated logic circuit of hardware in the processor 1620 or instructions in a form of software. The method disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory 1610, and the processor 1620 reads information in the memory 1610 and completes the steps in the foregoing method in combination with hardware of the processor. To avoid repetition, details are not described herein again.

It should be understood that, in embodiments of this application, the processor may be a central processing unit (central processing unit, CPU), and the processor may be alternatively another general-purpose processor, a digital signal processor (digital signal processor, DSP), an application-specific integrated circuit (application-specific integrated circuit, ASIC), a field-programmable gate array (field-programmable gate array, FPGA), or another programmable logic device, discrete gate or transistor logic device, discrete hardware component, or the like. The general-purpose processor may be a microprocessor, and the processor may be alternatively any conventional processor or the like.

It should be further understood that, in embodiments of this application, the memory may include a read-only memory and a random access memory, and provide instructions and data for the processor. A part of the processor may further include a non-volatile random access memory. For example, the processor may further store information about a device type.

It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between associated objects.

It should be understood that sequence numbers of the foregoing processes do not mean execution sequences in various embodiments of this application. The execution sequences of the processes should be determined based on functions and internal logic of the processes, but should not be construed as any limitation on implementation processes in embodiments of this application.

A person of ordinary skill in the art may be aware that units and algorithm steps in the examples described with reference to embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing described apparatus embodiments are merely examples. For example, division into the units is merely a logical function division and may be another division during actual implementation. For example, a plurality of units or components may be combined or integrated into another system, or some features may be ignored or may not be performed. In addition, displayed or discussed mutual couplings or direct couplings or communication connections may be implemented through some interfaces. The indirect couplings or communication connections between the apparatuses or units may be implemented in an electrical form, a mechanical form, or another form.

The units described as separate components may or may not be physically separate, and components displayed as units may or may not be physical units. To be specific, the components may be located at one location, or may be distributed on a plurality of network units. Some or all of the units may be selected based on actual requirements to achieve the objectives of the solutions in embodiments.

In addition, functional units in embodiments of this application may be integrated into one processing unit, or each of the units may exist alone physically, or two or more units may be integrated into one unit.

When the functions are implemented in a form of a software function unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes a plurality of instructions for instructing a computer device (which may be, for example, a personal computer, a server, or a network device) to perform all or some of the steps of the method described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A trusted third party (1100), comprising:
a receiving unit (1110), configured to receive a first voucher request sent by a first vehicle trust anchor, VTA, in a vehicle, wherein the trusted third party (1100) stores an identifier, ID, of a vehicle-mounted device manufactured by one or more vehicle-mounted device manufacturers, the first voucher request is used to request a trusted voucher for a to-be-authenticated first vehicle-mounted device in the vehicle, and the first voucher request carries an ID of the first vehicle-mounted device;
a processing unit (1120), configured to determine that the ID of the first vehicle-mounted device received by the receiving unit corresponds to the ID of the vehicle-mounted device manufactured by the one or more vehicle-mounted device manufacturers; and
a sending unit (1130), configured to send the trusted voucher to the first VTA,
wherein the first voucher request further carries an ID of the first VTA, and before sending the trusted voucher to the first VTA, the processing unit is further configured to:
determine, based on the ID of the first vehicle-mounted device and the ID of the first VTA, that there is a first homing relationship between the first vehicle-mounted device and the first VTA, wherein the first homing relationship indicates that the first vehicle-mounted device is mounted in a vehicle corresponding to the first VTA.

2. The trusted third party (1100) according to claim 1, wherein the processing unit is further configured to:
send a query request to an ownership tracker platform, wherein the query request is used to request to query the first homing relationship, and the query request carries the ID of the first vehicle-mounted device and the ID of the first VTA; and
receive a query result sent by the ownership tracker platform, wherein the query result carries the first homing relationship.

3. The trusted third party (1100) according to any one of claims 1 to 2, wherein the processing unit is further configured to:
obtain a first nonce of the first vehicle-mounted device;
perform derivation based on the first nonce and a prestored first initial authentication key of the first vehicle-mounted device, to obtain a first authentication key, wherein the first authentication key is an authentication key used to perform security authentication between the first vehicle-mounted device and the first VTA; and
configure the first authentication key for the first VTA.

4. A first vehicle trust anchor, VTA (1300), comprising:
a sending unit (1310), configured to send a first voucher request to a trusted third party, wherein the trusted third party (1100) stores an identifier, ID, of a vehicle-mounted device manufactured by one or more vehicle-mounted device manufacturers, the first voucher request is used to request a trusted voucher for a to-be-authenticated first vehicle-mounted device in a vehicle, and the first voucher request carries an ID of the first vehicle-mounted device; and
a receiving unit (1320), configured to receive the trusted voucher, sent by the trusted third party, when the ID of the first vehicle-mounted device corresponds to the ID of the vehicle-mounted device manufactured by the one or more vehicle-mounted device manufacturers,
wherein the first voucher request further carries an ID of the first VTA (1310) for being used by the trusted third party to determine that there is a first homing relationship between the first VTA (1310) and the first vehicle-mounted device, wherein the first homing relationship indicates that the first vehicle-mounted device is mounted in a vehicle corresponding to the first VTA (1310).

5. The first VTA (1310) according to claim 4, wherein
the sending unit (1310) is further configured to send a first nonce of the first vehicle-mounted device to the trusted third party (1100); and
the receiving unit (1320) is further configured to receive an encrypted first authentication key sent by the trusted third party (1100), and the encrypted first authentication key is obtained by encrypting a first authentication key by using a public key of the first VTA (1310).

6. The first VTA (1310) according to claim 5, wherein the first VTA (1310) further comprises:
a first processing unit, configured to decrypt the encrypted first authentication key by using a private key of the first VTA (1310), to obtain the first authentication key;
the first processing unit is further configured to encrypt the trusted voucher based on the first authentication key, to obtain an encrypted trusted voucher; and
the sending unit (1310) is further configured to send the encrypted trusted voucher to the first vehicle-mounted device.

7. The first VTA (1310) according to claim 5 or 6, wherein
the first processing unit is further configured to determine an authentication key of a second vehicle-mounted device in the vehicle based on the first authentication key and a prestored key hierarchical relationship, and the key hierarchical relationship is used to indicate a derivation rule between the authentication key of the second vehicle-mounted device and the first authentication key.

8. The first VTA (1310) according to claim 4, wherein the first VTA (1310) further comprises a second processing unit;
the receiving unit (1320) is further configured to receive a second nonce sent by the first vehicle-mounted device;
the second processing unit is configured to perform derivation based on the second nonce and a prestored second initial authentication key of the first vehicle-mounted device, to obtain a second authentication key, and the second authentication key is an authentication key used to perform security authentication between the first vehicle-mounted device and the first VTA (1310); and
the second processing unit is further configured to configure the second authentication key for the first vehicle-mounted device.

9. An authentication system, comprising a trusted third party (1100) according to any one of claims 1 to 3, a first vehicle trust anchor, VTA (1300), according to any one of claims 4 to 8, and a first vehicle-mounted device (1500), wherein the first vehicle-mounted device (1500) comprises:
a sending unit (1510), configured to send a second voucher request to the first vehicle trust anchor, VTA, (1300) of a vehicle, wherein the second voucher request is used to request a trusted voucher for a to-be-authenticated first vehicle-mounted device (1500) in the vehicle from a trusted third party (1100), the trusted third party (1100) stores an identifier, ID, of a vehicle-mounted device (1500) manufactured by one or more vehicle-mounted device (1500) manufacturers, and the second voucher request carries an ID of the first vehicle-mounted device (1500); and
a receiving unit, configured to receive, by using the first VTA, the trusted voucher, issued by the trusted third party (1100), when the ID of the first vehicle-mounted device (1500) corresponds to the ID of the vehicle-mounted device (1500) manufactured by the one or more vehicle-mounted device manufacturers.

10. A method for authenticating a vehicle-mounted device, the method comprising:
receiving, by a trusted third party (1100), a first voucher request sent by a first vehicle trust anchor, VTA, in a vehicle, wherein the trusted third party (1100) stores an identifier, ID, of a vehicle-mounted device manufactured by one or more vehicle-mounted device manufacturers, the first voucher request is used to request a trusted voucher for a to-be-authenticated first vehicle-mounted device in the vehicle, and the first voucher request carries an ID of the first vehicle-mounted device;
determining, by the trusted third party (1100), that the ID of the first vehicle-mounted device received by a receiving unit corresponds to the ID of the vehicle-mounted device manufactured by the one or more vehicle-mounted device manufacturers; and
sending, by the trusted third party (1100), the trusted voucher to the first VTA,
wherein the first voucher request further carries an ID of the first VTA, and before sending the trusted voucher to the first VTA, the method further comprises:
determining, by the trusted third party (1100) based on the ID of the first vehicle-mounted device and the ID of the first VTA, that there is a first homing relationship between the first vehicle-mounted device and the first VTA, wherein the first homing relationship indicates that the first vehicle-mounted device is mounted in a vehicle corresponding to the first VTA.

11. A method for authenticating a vehicle-mounted device, the method comprising:
sending, by a first vehicle trust anchor, VTA (1310), in a vehicle, a first voucher request to a trusted third party (1100), wherein the trusted third party (1100) stores an identifier, ID, of a vehicle-mounted device manufactured by one or more vehicle-mounted device manufacturers, the first voucher request is used to request a trusted voucher for a to-be-authenticated first vehicle-mounted device in a vehicle, and the first voucher request carries an ID of the first vehicle-mounted device; and
receiving, by the first VTA (1310), the trusted voucher, sent by the trusted third party, when the ID of the first vehicle-mounted device corresponds to the ID of the vehicle-mounted device manufactured by the one or more vehicle-mounted device manufacturers,
wherein the first voucher request further carries an ID of the first VTA (1310) for being used by the trusted third party to determine that there is a first homing relationship between the first VTA (1310) and the first vehicle-mounted device, wherein the first homing relationship indicates that the first vehicle-mounted device is mounted in a vehicle corresponding to the first VTA (1310).

12. A computer program product comprising instructions which, when the program is executed by a computer, cause the computer to carry out the method of claim 10 or claim 11.

## Patentansprüche

1. Vertrauenswürdige Drittpartei (1100), umfassend:
eine Empfangseinheit (1110), die dazu konfiguriert ist, eine erste Gutscheinanforderung zu empfangen, welche durch einen ersten Fahrzeugvertrauensanker, VTA, in einem Fahrzeug gesendet wird, wobei die vertrauenswürdige Drittpartei (1100) eine Kennung, ID, einer fahrzeugmontierten Vorrichtung speichert, die durch einen oder mehrere Hersteller fahrzeugmontierter Vorrichtungen hergestellt wurde, wobei die erste Gutscheinanforderung dazu verwendet wird, einen vertrauenswürdigen Gutschein für eine zu authentifizierende erste fahrzeugmontierte Vorrichtung in dem Fahrzeug anzufordern, und die erste Gutscheinanforderung eine ID der ersten fahrzeugmontierten Vorrichtung enthält;
eine Verarbeitungseinheit (1120), die dazu konfiguriert ist, zu bestimmen, dass die ID der durch die Empfangseinheit empfangenen ersten fahrzeugmontierten Vorrichtung der ID der durch den einen oder die mehreren Hersteller fahrzeugmontierter Vorrichtungen hergestellten fahrzeugmontierten Vorrichtung entspricht; und
eine Sendeeinheit (1130), die dazu konfiguriert ist, den vertrauenswürdigen Gutschein an den ersten VTA zu senden,
wobei die erste Gutscheinanforderung ferner eine ID des ersten VTA enthält und die Verarbeitungseinheit vor dem Senden des vertrauenswürdigen Gutscheins an den ersten VTA ferner zu Folgendem konfiguriert ist:
Bestimmen, basierend auf der ID der ersten fahrzeugmontierten Vorrichtung und der ID des ersten VTA, dass eine erste Referenzbeziehung zwischen der ersten fahrzeugmontierten Vorrichtung und dem ersten VTA besteht, wobei die erste Referenzbeziehung angibt, dass die erste fahrzeugmontierte Vorrichtung in einem Fahrzeug montiert ist, das dem ersten VTA entspricht.

2. Vertrauenswürde Drittpartei (1100) nach Anspruch 1, wobei die Verarbeitungseinheit ferner zu Folgendem konfiguriert ist:
Senden einer Abfrageanforderung an eine Plattform zur Eigentumsverfolgung, wobei die Abfrageanforderung dazu verwendet wird, die erste Referenzbeziehung abzufragen, und die Abfrageanforderung die ID der ersten fahrzeugmontierten Vorrichtung und die ID des ersten VTA enthält; und
Empfangen eines Abfrageergebnisses, das durch die Plattform zur Eigentumsverfolgung gesendet wird, wobei das Abfrageergebnis die erste Referenzbeziehung enthält.

3. Vertrauenswürde Drittpartei (1100) nach einem der Ansprüche 1 bis 2, wobei die Verarbeitungseinheit ferner zu Folgendem konfiguriert ist:
Erlangen einer ersten Nonce der ersten fahrzeugmontierten Vorrichtung;
Durchführen einer Ableitung basierend auf der ersten Nonce und einem vorab gespeicherten ersten anfänglichen Authentifizierungsschlüssels der ersten fahrzeugmontierten Vorrichtung, um einen ersten Authentifizierungsschlüssel zu erlangen, wobei der erste Authentifizierungsschlüssel ein Authentifizierungsschlüssel ist, der dazu verwendet wird, eine Sicherheitsauthentifizierung zwischen der ersten fahrzeugmontierten Vorrichtung und dem ersten VTA durchzuführen; und
Konfigurieren des ersten Authentifizierungsschlüssels für den ersten VTA.

4. Erster Fahrzeugvertrauensanker, VTA (1300), umfassend:
eine Sendeeinheit (1310), die dazu konfiguriert ist, eine erste Gutscheinanforderung an eine vertrauenswürdige Drittpartei zu senden, wobei die vertrauenswürdige Drittpartei (1100) eine Kennung, ID, einer fahrzeugmontierten Vorrichtung speichert, die durch einen oder mehrere Hersteller fahrzeugmontierter Vorrichtungen hergestellt wurde, wobei die erste Gutscheinanforderung dazu verwendet wird, einen vertrauenswürdigen Gutschein für eine zu authentifizierende erste fahrzeugmontierte Vorrichtung in einem Fahrzeug anzufordern, und die erste Gutscheinanforderung eine ID der ersten fahrzeugmontierten Vorrichtung enthält; und
eine Empfangseinheit (1320), die dazu konfiguriert ist, den durch die vertrauenswürdige Drittpartei gesendeten vertrauenswürdigen Gutschein zu empfangen, wenn die ID der ersten fahrzeugmontierten Vorrichtung der ID der durch den einen oder die mehreren Hersteller fahrzeugmontierter Vorrichtungen hergestellten fahrzeugmontierten Vorrichtung entspricht,
wobei die erste Gutscheinanforderung ferner eine ID des ersten VTA (1310) enthält, um durch die vertrauenswürdige Drittpartei verwendet zu werden, um zu bestimmen, dass eine erste Referenzbeziehung zwischen dem ersten VTA (1310) und der ersten fahrzeugmontierten Vorrichtung besteht, wobei die erste Referenzbeziehung angibt, dass die erste fahrzeugmontierte Vorrichtung in einem Fahrzeug montiert ist, das dem ersten VTA (1310) entspricht.

5. Erster VTA (1310) nach Anspruch 4, wobei
die Sendeeinheit (1310) ferner dazu konfiguriert ist, eine erste Nonce der ersten fahrzeugmontierten Vorrichtung an die vertrauenswürdige Drittpartei (1100) zu senden; und
die Empfangseinheit (1320) ferner dazu konfiguriert ist, einen verschlüsselten ersten Authentifizierungsschlüssel zu empfangen, der durch die vertrauenswürdige Drittpartei (1100) gesendet wird, wobei der verschlüsselte erste Authentifizierungsschlüssel durch Verschlüsseln eines ersten Authentifizierungsschlüssels unter Verwendung eines öffentlichen Schlüssels des ersten VTA (1310) erlangt wird.

6. Erster VTA (1310) nach Anspruch 5, wobei der erste VTA (1310) ferner Folgendes umfasst:
eine erste Verarbeitungseinheit, die dazu konfiguriert ist, den verschlüsselten ersten Authentifizierungsschlüssel unter Verwendung eines privaten Schlüssels des ersten VTA (1310) zu entschlüsseln, um den ersten Authentifizierungsschlüssel zu erlangen;
wobei die erste Verarbeitungseinheit ferner dazu konfiguriert ist, den vertrauenswürdigen Gutschein basierend auf dem ersten Authentifizierungsschlüssel zu verschlüsseln, um einen verschlüsselten vertrauenswürdigen Gutschein zu erlangen; und
wobei die Sendeeinheit (1310) ferner dazu konfiguriert ist, den verschlüsselten vertrauenswürdigen Gutschein an die erste fahrzeugmontierte Vorrichtung zu senden.

7. Erster VTA (1310) nach Anspruch 5 oder 6, wobei
die erste Verarbeitungseinheit ferner dazu konfiguriert ist, einen Authentifizierungsschlüssel einer zweiten fahrzeugmontierten Vorrichtung in dem Fahrzeug basierend auf dem ersten Authentifizierungsschlüssel und einer vorab gespeicherten Schlüsselhierarchiebeziehung zu bestimmen und die Schlüsselhierarchiebeziehung dazu verwendete wird, eine Ableitungsregel zwischen dem Authentifizierungsschlüssel der zweiten fahrzeugmontierten Vorrichtung und dem ersten Authentifizierungsschlüssel anzugeben.

8. Erster VTA (1310) nach Anspruch 4, wobei der erste VTA (1310) ferner eine zweite Verarbeitungseinheit umfasst;
wobei die Empfangseinheit (1320) ferner dazu konfiguriert ist, eine zweite Nonce zu empfangen, die durch die erste fahrzeugmontierte Vorrichtung gesendet wird;
wobei die zweite Verarbeitungseinheit dazu konfiguriert ist, basierend auf der zweiten Nonce und einem vorab gespeicherten zweiten anfänglichen Authentifizierungsschlüssel der ersten fahrzeugmontierten Vorrichtung eine Ableitung durchzuführen, um einen zweiten Authentifizierungsschlüssel zu erlangen, und der zweite Authentifizierungsschlüssel ein Authentifizierungsschlüssel ist, der dazu verwendet wird, eine Sicherheitsauthentifizierung zwischen der ersten fahrzeugmontierten Vorrichtung und dem ersten VTA (1310) durchzuführen; und
wobei die zweite Verarbeitungseinheit ferner dazu konfiguriert ist, den zweiten Authentifizierungsschlüssel für die erste fahrzeugmontierte Vorrichtung zu konfigurieren.

9. Authentifizierungssystem, umfassend eine vertrauenswürdige Drittpartei (1100) nach einem der Ansprüche 1 bis 3, einen ersten Fahrzeugvertrauensanker, VTA (1300), nach einem der Ansprüche 4 bis 8 und eine erste fahrzeugmontierte Vorrichtung (1500), wobei die erste fahrzeugmontierte Vorrichtung (1500) Folgendes umfasst:
eine Sendeeinheit (1510), die dazu konfiguriert ist, eine zweite Gutscheinanforderung an den ersten Fahrzeugvertrauensanker, VTA, (1300) eines Fahrzeugs zu senden, wobei die zweite Gutscheinanforderung dazu verwendet wird, einen vertrauenswürdigen Gutschein für eine zu authentifizierende erste fahrzeugmontierte Vorrichtung (1500) in dem Fahrzeug von einer vertrauenswürdigen Drittpartei (1100) anzufordern, wobei die vertrauenswürdige Drittpartei (1100) eine Kennung, ID, einer fahrzeugmontierten Vorrichtung (1500) zu speichern, die durch einen oder mehrere Hersteller fahrzeugmontierter Vorrichtungen (1500) hergestellt wurde, und die zweite Gutscheinanforderung eine ID der ersten fahrzeugmontierten Vorrichtung (1500) enthält; und
eine Empfangseinheit, die dazu konfiguriert ist, den durch die vertrauenswürdige Drittpartei (1100) ausgegebenen vertrauenswürdigen Gutschein unter Verwendung des ersten VTA zu empfangen, wenn die ID der ersten fahrzeugmontierten Vorrichtung (1500) der ID der durch den einen oder die mehreren Hersteller fahrzeugmontierter Vorrichtungen hergestellten fahrzeugmontierten Vorrichtung (1500) entspricht.

10. Verfahren zum Authentifizieren einer fahrzeugmontierten Vorrichtung, wobei das Verfahren Folgendes umfasst:
Empfangen, durch eine vertrauenswürdige Drittpartei (1100) einer ersten Gutscheinanforderung, welche durch einen ersten Fahrzeugvertrauensanker, VTA, in einem Fahrzeug gesendet wird, wobei die vertrauenswürdige Drittpartei (1100) eine Kennung, ID, einer fahrzeugmontierten Vorrichtung speichert, die durch einen oder mehrere Hersteller fahrzeugmontierter Vorrichtungen hergestellt wurde, wobei die erste Gutscheinanforderung dazu verwendet wird, einen vertrauenswürdigen Gutschein für eine zu authentifizierende erste fahrzeugmontierte Vorrichtung in dem Fahrzeug anzufordern, und die erste Gutscheinanforderung eine ID der ersten fahrzeugmontierten Vorrichtung enthält;
Bestimmen, durch die vertrauenswürdige Drittpartei (1100), dass die ID der durch eine Empfangseinheit empfangenen ersten fahrzeugmontierten Vorrichtung der ID der durch den einen oder die mehreren Hersteller fahrzeugmontierter Vorrichtungen hergestellten fahrzeugmontierten Vorrichtung entspricht; und
Senden, durch die vertrauenswürdige Drittpartei (1100), des vertrauenswürdigen Gutscheins an den ersten VTA,
wobei die erste Gutscheinanforderung ferner eine ID des ersten VTA enthält und das Verfahren vor dem Senden des vertrauenswürdigen Gutscheins an den ersten VTA ferner Folgendes umfasst:
Bestimmen, durch die vertrauenswürdige Drittpartei (1100) basierend auf der ID der ersten fahrzeugmontierten Vorrichtung und der ID des ersten VTA, dass eine erste Referenzbeziehung zwischen der ersten fahrzeugmontierten Vorrichtung und dem ersten VTA besteht, wobei die erste Referenzbeziehung angibt, dass die erste fahrzeugmontierte Vorrichtung in einem Fahrzeug montiert ist, das dem ersten VTA entspricht.

11. Verfahren zum Authentifizieren einer fahrzeugmontierten Vorrichtung, wobei das Verfahren Folgendes umfasst:
Senden, durch einen ersten Fahrzeugvertrauensanker, VTA (1310), in einem Fahrzeug, einer ersten Gutscheinanforderung an eine vertrauenswürdige Drittpartei (1100), wobei die vertrauenswürdige Drittpartei (1100) eine Kennung, ID, einer fahrzeugmontierten Vorrichtung speichert, die durch einen oder mehrere Hersteller fahrzeugmontierter Vorrichtungen hergestellt wurde, wobei die erste Gutscheinanforderung dazu verwendet wird, einen vertrauenswürdigen Gutschein für eine zu authentifizierende erste fahrzeugmontierte Vorrichtung in einem Fahrzeug anzufordern, und die erste Gutscheinanforderung eine ID der ersten fahrzeugmontierten Vorrichtung enthält; und
Empfangen, durch den ersten VTA (1310), des durch die vertrauenswürdige Drittpartei gesendeten vertrauenswürdigen Gutscheins, wenn die ID der ersten fahrzeugmontierten Vorrichtung der ID der durch den einen oder die mehreren Hersteller fahrzeugmontierter Vorrichtungen hergestellten fahrzeugmontierten Vorrichtung entspricht,
wobei die erste Gutscheinanforderung ferner eine ID des ersten VTA (1310) enthält, um durch die vertrauenswürdige Drittpartei verwendet zu werden, um zu bestimmen, dass eine erste Referenzbeziehung zwischen dem ersten VTA (1310) und der ersten fahrzeugmontierten Vorrichtung besteht, wobei die erste Referenzbeziehung angibt, dass die erste fahrzeugmontierte Vorrichtung in einem Fahrzeug montiert ist, das dem ersten VTA (1310) entspricht.

12. Computerprogrammprodukt, umfassend Anweisungen, die, wenn das Programm durch einen Computer ausgeführt wird, den Computer dazu veranlassen, das Verfahren nach Anspruch 10 oder Anspruch 11 umzusetzen.

## Revendications

1. Tiers de confiance (1100), comprenant :
une unité de réception (1110), configurée pour recevoir une première demande de certificat envoyée par un premier ancrage de confiance de véhicule, VTA, dans un véhicule, dans lequel le tiers de confiance (1100) stocke un identifiant, ID, d'un dispositif embarqué fabriqué par un ou plusieurs fabricants de dispositifs embarqués, la première demande de certificat est utilisée pour demander un certificat de confiance pour un premier dispositif embarqué à authentifier dans le véhicule, et la première demande de certificat contient un identifiant du premier dispositif embarqué ;
une unité de traitement (1120), configurée pour déterminer que l'identifiant du premier dispositif embarqué reçu par l'unité de réception correspond à l'identifiant du dispositif embarqué fabriqué par les un ou plusieurs fabricants de dispositifs embarqués ; et
une unité d'envoi (1130), configurée pour envoyer le certificat de confiance au premier VTA,
dans lequel la première demande de certificat contient en outre un identifiant du premier VTA, et avant d'envoyer le certificat de confiance au premier VTA, l'unité de traitement est en outre configurée pour :
déterminer, sur la base de l'identifiant du premier dispositif embarqué et de l'identifiant du premier VTA, qu'il existe une première relation de homing entre le premier dispositif embarqué et le premier VTA, dans lequel la première relation de homing indique que le premier dispositif embarqué est monté dans un véhicule correspondant au premier VTA.

2. Tiers de confiance (1100) selon la revendication 1, dans lequel l'unité de traitement est en outre configurée pour :
envoyer une demande d'interrogation à une plateforme de suivi de propriété, dans lequel la demande d'interrogation est utilisée pour interroger la première relation de homing et la demande d'interrogation contient l'identifiant du premier dispositif embarqué et l'identifiant du premier VTA ; et
recevoir un résultat d'interrogation envoyé par la plateforme de suivi de propriété, dans lequel le résultat d'interrogation contient la première relation de homing.

3. Tiers de confiance (1100) selon l'une quelconque des revendications 1 à 2, dans lequel l'unité de traitement est en outre configurée pour :
obtenir un premier nonce du premier dispositif embarqué ;
réaliser une dérivation sur la base du premier nonce et d'une première clé d'authentification initiale préstockée du premier dispositif embarqué, pour obtenir une première clé d'authentification, dans lequel la première clé d'authentification est une clé d'authentification utilisée pour réaliser une authentification de sécurité entre le premier dispositif embarqué et le premier VTA ; et
configurer la première clé d'authentification pour le premier VTA.

4. Premier ancrage de confiance de véhicule, VTA (1300), comprenant :
une unité d'envoi (1310), configurée pour envoyer une première demande de certificat à un tiers de confiance, dans lequel le tiers de confiance (1100) stocke un identifiant, ID, d'un dispositif embarqué fabriqué par un ou plusieurs fabricants de dispositifs embarqués, la première demande de certificat est utilisée pour demander un certificat de confiance pour un premier dispositif embarqué à authentifier dans un véhicule, et la première demande de certificat contient un identifiant du premier dispositif embarqué ; et
une unité de réception (1320), configurée pour recevoir le certificat de confiance, envoyé par le tiers de confiance, lorsque l'identifiant du premier dispositif embarqué correspond à l'identifiant du dispositif embarqué fabriqué par les un ou plusieurs fabricants de dispositifs embarqués,
dans lequel la première demande de certificat contient en outre un identifiant du premier VTA (1310) destiné à être utilisé par le tiers de confiance pour déterminer qu'il existe une première relation de homing entre le premier VTA (1310) et le premier dispositif embarqué, dans lequel la première relation de homing indique que le premier dispositif embarqué est monté dans un véhicule correspondant au premier VTA (1310).

5. Premier VTA (1310) selon la revendication 4, dans lequel
l'unité d'envoi (1310) est en outre configurée pour envoyer un premier nonce du premier dispositif embarqué au tiers de confiance (1100) ; et
l'unité de réception (1320) est en outre configurée pour recevoir une première clé d'authentification chiffrée envoyée par le tiers de confiance (1100), et la première clé d'authentification chiffrée est obtenue par le chiffrement d'une première clé d'authentification à l'aide d'une clé publique du premier VTA (1310).

6. Premier VTA (1310) selon la revendication 5, dans lequel le premier VTA (1310) comprend en outre :
une première unité de traitement, configurée pour déchiffrer la première clé d'authentification chiffrée à l'aide d'une clé privée du premier VTA (1310), pour obtenir la première clé d'authentification ;
la première unité de traitement est en outre configurée pour chiffrer le certificat de confiance sur la base de la première clé d'authentification, pour obtenir un certificat de confiance chiffré ; et
l'unité d'envoi (1310) est en outre configurée pour envoyer le certificat de confiance chiffré au premier dispositif embarqué.

7. Premier VTA (1310) selon la revendication 5 ou 6, dans lequel la première unité de traitement est en outre configurée pour déterminer une clé d'authentification d'un second dispositif embarqué dans le véhicule sur la base de la première clé d'authentification et d'une relation hiérarchique de clés préstockée, et la relation hiérarchique de clés est utilisée pour indiquer une règle de dérivation entre la clé d'authentification du second dispositif embarqué et la première clé d'authentification.

8. Premier VTA (1310) selon la revendication 4, dans lequel le premier VTA (1310) comprend en outre une seconde unité de traitement ;
l'unité de réception (1320) est en outre configurée pour recevoir un second nonce envoyé par le premier dispositif embarqué ;
la seconde unité de traitement est configurée pour réaliser une dérivation sur la base du second nonce et d'une seconde clé d'authentification initiale préstockée du premier dispositif embarqué, pour obtenir une seconde clé d'authentification, et la seconde clé d'authentification est une clé d'authentification utilisée pour réaliser une authentification de sécurité entre le premier dispositif embarqué et le premier VTA (1310) ; et
la seconde unité de traitement est en outre configurée pour configurer la seconde clé d'authentification pour le premier dispositif embarqué.

9. Système d'authentification, comprenant un tiers de confiance (1100) selon l'une quelconque des revendications 1 à 3, un premier ancrage de confiance de véhicule, VTA (1300), selon l'une quelconque des revendications 4 à 8, et un premier dispositif embarqué (1500), dans lequel le premier dispositif embarqué (1500) comprend :
une unité d'envoi (1510), configurée pour envoyer une seconde demande de certificat au premier ancrage de confiance de véhicule, VTA (1300), d'un véhicule, dans lequel la seconde demande de certificat est utilisée pour demander un certificat de confiance pour un premier dispositif embarqué (1500) à authentifier dans le véhicule auprès d'un tiers de confiance (1100), le tiers de confiance (1100) stocke un identifiant, ID, d'un dispositif embarqué (1500) fabriqué par un ou plusieurs fabricants de dispositifs embarqués (1500), et la seconde demande de certificat contient un identifiant du premier dispositif embarqué (1500) ; et
une unité de réception, configurée pour recevoir, à l'aide du premier VTA, le certificat de confiance, délivré par le tiers de confiance (1100), lorsque l'identifiant du premier dispositif embarqué (1500) correspond à l'identifiant du dispositif embarqué (1500) fabriqué par les un ou plusieurs fabricants de dispositifs embarqués.

10. Procédé d'authentification d'un dispositif embarqué, le procédé comprenant :
la réception, par un tiers de confiance (1100), d'une première demande de certificat envoyée par un premier ancrage de confiance de véhicule, VTA, dans un véhicule, dans lequel le tiers de confiance (1100) stocke un identifiant, ID, d'un dispositif embarqué fabriqué par un ou plusieurs fabricants de dispositifs embarqués, la première demande de certificat est utilisée pour demander un certificat de confiance pour un premier dispositif embarqué à authentifier dans le véhicule, et la première demande de certificat contient un identifiant du premier dispositif embarqué ;
la détermination, par le tiers de confiance (1100), que l'identifiant du premier dispositif embarqué reçu par une unité de réception correspond à l'identifiant du dispositif embarqué fabriqué par les un ou plusieurs fabricants de dispositifs embarqués ; et
l'envoi, par le tiers de confiance (1100), du certificat de confiance au premier VTA,
dans lequel la première demande de certificat contient en outre un identifiant du premier VTA, et avant d'envoyer le certificat de confiance au premier VTA, le procédé comprend en outre :
la détermination, par le tiers de confiance (1100), sur la base de l'identifiant du premier dispositif embarqué et de l'identifiant du premier VTA, qu'il existe une première relation de homing entre le premier dispositif embarqué et le premier VTA, dans lequel la première relation de homing indique que le premier dispositif embarqué est monté dans un véhicule correspondant au premier VTA.

11. Procédé d'authentification d'un dispositif embarqué, le procédé comprenant :
l'envoi, par un premier ancrage de confiance de véhicule, VTA (1310), dans un véhicule, d'une première demande de certificat à un tiers de confiance (1100), dans lequel le tiers de confiance (1100) stocke un identifiant, ID, d'un dispositif embarqué fabriqué par un ou plusieurs fabricants de dispositifs embarqués, la première demande de certificat est utilisée pour demander un certificat de confiance pour un premier dispositif embarqué à authentifier dans un véhicule, et la première demande de certificat contient un identifiant du premier dispositif embarqué ; et
la réception, par le premier VTA (1310), du certificat de confiance, envoyé par le tiers de confiance, lorsque l'identifiant du premier dispositif embarqué correspond à l'identifiant du dispositif embarqué fabriqué par les un ou plusieurs fabricants de dispositifs embarqués,
dans lequel la première demande de certificat contient en outre un identifiant du premier VTA (1310) destiné à être utilisé par le tiers de confiance pour déterminer qu'il existe une première relation de homing entre le premier VTA (1310) et le premier dispositif embarqué, dans lequel la première relation de homing indique que le premier dispositif embarqué est monté dans un véhicule correspondant au premier VTA (1310).

12. Produit de programme informatique comprenant des instructions qui, lorsque le programme est exécuté par un ordinateur, amènent l'ordinateur à mettre en œuvre le procédé selon la revendication 10 ou la revendication 11.
